(19) Europäisches Patentamt
European Patent Office
Office européen des brevets

(11) **EP 4 575 781 A1**

(12) **EUROPEAN PATENT APPLICATION**
published in accordance with Art. 153(4) EPC

(43) Date of publication:
**25.06.2025  Bulletin 2025/26**

(21) Application number: 23853975.3

(22) Date of filing: **12.05.2023**

(51) International Patent Classification (IPC):
***G06F 9/48*** (2006.01)

(52) Cooperative Patent Classification (CPC):
**G06F 9/48; G06F 9/50;** Y02D 10/00

(86) International application number:
**PCT/CN2023/093867**

(87) International publication number:
**WO 2024/037068 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **19.08.2022   CN 202211001547**

(71) Applicant: **Huawei Technologies Co., Ltd.
Shenzhen, Guangdong 518129 (CN)**

(72) Inventors:
• **LI, Haicheng
Shenzhen, Guangdong 518129 (CN)**

• **ZHOU, Yigang
Shenzhen, Guangdong 518129 (CN)**
• **WANG, Yaoguang
Shenzhen, Guangdong 518129 (CN)**
• **XIE, Xinghua
Shenzhen, Guangdong 518129 (CN)**
• **LU, Xu
Shenzhen, Guangdong 518129 (CN)**
• **CHENG, Jian
Shenzhen, Guangdong 518129 (CN)**

(74) Representative: **Körber, Martin Hans et al
Mitscherlich PartmbB
Patent- und Rechtsanwälte
Karlstraße 7
80333 München (DE)**

(54) **TASK SCHEDULING METHOD, ELECTRONIC DEVICE AND COMPUTER-READABLE STORAGE MEDIUM**

(57)    The present invention relates to the field of computer technologies, and in particular, to a task scheduling method, an electronic device, and a computer-readable storage medium. The method includes: computing a first load value required for executing a first task, and determining at least one first-level processor corresponding to a first load range to which the first load value belongs; processing the first task by using a first-level processor in an idle state in the at least one first-level processor; computing a second load value required for executing a second task, and determining at least one second-level processor corresponding to a second load range to which the second load value belongs; and processing the second task by using a second-level processor in an idle state in the at least one second-level processor. In this application, before execution of a task or during execution of a task, the task can be scheduled, in a timely manner, to an idle CPU at a matched computing power level, for continued processing. This helps improve task execution efficiency, and processing performance of the electronic device.

FIG. 11

EP 4 575 781 A1

## Description

This application claims priority to Chinese Patent Application No. 202211001547.4, filed with the China National Intellectual Property Administration on August 19, 2022 and entitled "TASK SCHEDULING METHOD, ELECTRONIC DEVICE, AND COMPUTER-READABLE STORAGE MEDIUM", which is incorporated herein by reference in its entirety.

## TECHNICAL FIELD

The present invention relates to the field of computer technologies, and in particular, to a task scheduling method, an electronic device, and a computer-readable storage medium.

## BACKGROUND

With development of computer technologies, a ratio of unstructured data in various cloud and internet scenarios gradually increases. To meet a storage requirement of a large amount of unstructured data, a storage system expansion manner used by various electronic devices gradually evolves from a scale-up (Scale-up) manner to a scale-out (Scale-out) manner, where the scale-up manner means that computing power is improved by increasing a single-core frequency of a CPU while the scale-out manner means that computing power is improved by increasing a quantity of cores of a CPU. The reason for the evolvement is that in the scale-out manner, an expanded CPU on each node may usually have a larger processing capability, a larger capacity, and a larger I/O bandwidth, so that processing performance can be improved while the capacity is expanded. Accordingly, when processing various tasks, various electronic devices need to adapt to load characteristics of different tasks, and invoke a processor (Central Processing Unit, CPU) with an adapted computing capability, adapted running efficiency, and the like for computation and processing of a corresponding task. It may be understood that a load characteristic of a task may be used to measure a quantity of computing resources, storage resources, and other resources to be consumed during execution of the task.

To schedule tasks with different load characteristics to adapted processors for running, a plurality of types of processor architectures are proposed in the industry. For example, in a heterogeneous many-core architecture proposed for a multi-core CPU, horizontal expansion of processor computing power may be implemented by using non-uniform memory access (Non-Uniform Memory Access, NUMA). In addition, computing power of a computer system in different scenarios may be improved by using an asymmetric multi-processor (Asymmetric Multi-Processor, AMP) architecture. In the AMP architecture, processors with different computing powers are interconnected through a bus. Because energy efficiency ratios of processors with different computing power levels are different, an operating system (Operating System, OS) needs to match, based on a real-time load characteristic of a task, the task with a processor with corresponding computing power for execution of the task. Then, the task is scheduled to the matched processor for running. In this way, an overall energy efficiency ratio of a processor and other hardware in the entire system is improved, and an overall throughput rate and an instantaneous response speed of the system are also effectively improved. Therefore, a task scheduling solution is required to schedule each task to a processor with matched computing power for processing.

## SUMMARY

In view of this, embodiments of this application provide a task scheduling method, an electronic device, and a computer-readable storage medium, to schedule various types of tasks processed by an electronic device to a processor with matched computing power for processing, and improve efficiency of allocating computing power resources of CPUs on the electronic device.

According to a first aspect, an embodiment of this application provides a task scheduling method, applied to an electronic device. The method includes:

computing a first load value required for executing a first task, and determining at least one first-level processor corresponding to a first load range to which the first load value belongs; and processing the first task by using a first-level processor in an idle state in the at least one first-level processor; and
computing a second load value required for executing a second task, and determining at least one second-level processor corresponding to a second load range to which the second load value belongs; and processing the second task by using a second-level processor in an idle state in the at least one second-level processor.

To be specific, according to the task scheduling method provided in this embodiment of this application, a required task load characteristic value corresponding to each task executed on the electronic device is computed, so that each task is scheduled in a timely manner to an idle CPU at a matched computing power level for running. In this way, a capability of the electronic device to dynamically schedule each task executed by the electronic device can be improved, and a CPU with matched computing power is allocated to each task in a timely manner, to process a corresponding task. This helps improve running efficiency of each task. In addition, scheduling a corresponding task to an idle CPU for processing also helps improve processing efficiency of each task, and helps improve processing performance of the electronic device.

The foregoing electronic device may be, for example, an electronic device like a server, a mobile phone, or a PC. This is not limited herein. The task load characteristic value includes the first load value corresponding to the first task and the second load value corresponding to the second task. The first-level processor and the second-level processor may be, for example, a performance core and an efficiency core described in the following specific implementations. In some other embodiments, the first-level processor and the second-level processor may alternatively correspond to names of other levels. This is not limited herein. The first-level processor that processes the first task may be, for example, a first target CPU in the following specific implementations.

In a possible implementation of the first aspect, in a process of processing the first task by using the first-level processor, the method further includes: computing a third load value required for executing the first task, and determining at least one third-level processor corresponding to a third load range to which the third load value belongs; and processing the first task by using a third-level processor in an idle state in the at least one third-level processor, where the third-level processor and the first-level processor are processors at different levels, and the third-level processor and the second-level processor are processors at a same level or different levels.

In other words, the foregoing task scheduling process may include a process of scheduling a task in a task processing process. For example, in the process of processing the first task by using the first-level processor, the electronic device may monitor a real-time task load characteristic value of the first task. For example, the electronic device learns, through monitoring, that a current task load characteristic value of the first task is the third load value. The first task corresponding to the third load value may be more suitable for running on a processor at another level, for example, more suitable for running on the third-level processor. In this case, the first task may be scheduled to the third-level processor for further processing. The third-level processor may be, for example, a second target CPU in the following specific implementations.

It may be understood that, in the process of processing the first task by using the first-level processor, a task load characteristic value corresponding to the first task may increase or decrease because a large quantity of tasks are processed on the first-level processor, or because a type of an instruction that needs to be executed and that corresponds to the first task changes and a statistical result of execution of the instruction changes, or the like. Consequently, it is no longer suitable for the first task to be processed continually on the first-level processor. In this case, the electronic device may monitor this change in a timely manner, and schedule the running first task to the idle third-level processor at a more matched computing power level to proceed processing of the first task. This helps improve processing efficiency of the first task.

It may be understood that, when processors at two computing power levels are preset on the electronic device, the third-level processor may be a second-level processor different from the first-level processor. When processors at three computing power levels are preset on the electronic device, the third-level processor may be different from the second-level processor, or may be a processor at a level the same as that of the second-level processor. This is not limited herein.

In a possible implementation of the first aspect, the processing the first task by using a third-level processor in an idle state in the at least one third-level processor includes: triggering an interrupt for the process of processing the first task by using the first-level processor; removing the first task from a first task queue of the first-level processor, and adding the first task to a second task queue of the third-level processor; and selecting, by using the third-level processor, the first task in the second task queue to proceed processing of the first task.

In other words, a process in which the first task is scheduled from the first-level processor on which the first task originally runs to the third-level processor for continued processing may be initiated by using an interrupt mechanism. For example, an interrupt is triggered for a process of processing the first task by using the first-level processor first, and then, the first task is scheduled to a task queue of the third-level processor to wait for processing. It may be understood that the scheduled third-level processor is usually in the idle state. Therefore, after the first task is scheduled to the third-level processor, processing on the first task may continue quickly. This helps reduce a delay in a task scheduling process, makes a user unaware of the task scheduling process, and helps improve user experience.

In some other embodiments, the process in which the first task is scheduled from the first-level processor on which the first task originally runs to the third-level processor for continued processing may alternatively be initiated in a non-interrupt driving scenario. For example, after the first task is scheduled to the first-level processor, a task characteristic computation module may sample a PMU-related count value to compute a task load characteristic value, and initiate task scheduling when determining that the first task needs to be scheduled. This is not limited herein. It may be understood that the task scheduling process in the foregoing non-interrupt driving scenario is a software implementation process, and an interrupt does not need to be initiated.

In a possible implementation of the first aspect, the electronic device includes a preset first performance threshold and a preset second performance threshold that correspond to the first level processor, where the first performance threshold is greater than the second performance threshold; and the triggering an interrupt for the process of processing the first task by using the first-level processor includes: when detecting that the computed third load value is greater than the first performance threshold or less than the second performance threshold, triggering the interrupt for the process of processing the first task by using the first-level processor.

The first performance threshold may be, for example, an upper-bound threshold correspondingly set in MSR_PMU_MODEL_THRESHOLD_H defined for an MSR register of a CPU in Table 1 in the following specific implementations. The second performance threshold may be, for example, a lower-bound threshold correspondingly set in MSR_PMU_MODEL_THRESHOLD_L defined for the MSR register of the CPU in Table 1 in the following specific implementations. This is not limited herein.

In a possible implementation of the first aspect, the electronic device includes a correspondence between a task characteristic identifier and a processor level identifier, and the processor level identifier includes at least the first-level processor and the second-level processor; and

the determining at least one first-level processor corresponding to a first load range to which the first load value belongs includes: converting, based on a preset identifier conversion rule, the computed first load value into a first identifier value corresponding to the task characteristic identifier; and
determining that the first identifier value belongs to an identifier value range corresponding to a first task characteristic identifier, and determining the at least one first-level processor based on a first correspondence between the first task characteristic identifier and the first-level processor.

To be specific, a task load characteristic value, for example, the foregoing first load value, that corresponds to the first task and that is monitored by the electronic device in real time, may be converted into a corresponding task characteristic identifier value, and the identifier value may be, for example, a value obtained by proportionally converting the corresponding task load characteristic value. Correspondences between identifier value ranges corresponding to different task characteristic identifiers and processors at different computing power levels may be preset on the electronic device, or identifier value ranges corresponding to different task characteristic identifiers may correspond to computing power characteristic value ranges corresponding to processors at different computing power levels. In this way, it may be determined, based on the task load characteristic value monitored in real time, whether a computing power level of the processor on which the first task currently runs matches the first task.

In a possible implementation of the first aspect, the electronic device includes a second correspondence between the first load range and an identifier value range corresponding to the first task characteristic identifier; and the determining at least one first-level processor corresponding to a first load range to which the first load value belongs includes: determining the first load range to which the first load value belongs, and determining, based on the second correspondence, the first task characteristic identifier corresponding to the first load value; and determining the at least one first-level processor based on the first correspondence.

In some other embodiments, a correspondence between a task load characteristic value range and an identifier value range corresponding to a corresponding task characteristic identifier may also be preset on the electronic device. In this way, after a task load characteristic value range to which the monitored task load characteristic value belongs is determined, for example, after it is determined that the first load value belongs to the first load range, at least one first-level processor at a matched computing power level may be determined based on the identifier value range that corresponds to the first task characteristic identifier and that corresponds to the first load range.

In a possible implementation of the first aspect, the electronic device includes a plurality of processors; and the electronic device adds the processor level identifier to each processor based on a computing power characteristic value of each processor, where the computing power characteristic value of each processor is related to a frequency and microarchitecture computing power of each processor, and the frequency of the processor includes a dominant frequency or an operating frequency of the processor.

In a possible implementation of the first aspect, the first load value is related to a type of an instruction that is related to the first task and that is obtained and executed by the first-level processor and a statistical result of execution of the instruction; and the second load value is related to a type of an instruction that is related to the first task and that is obtained and executed by the second-level processor and a statistical result of execution of the instruction.

According to a second aspect, an embodiment of this application provides an electronic device, including one or more processors and one or more memories. The one or more memories store one or more programs, and when the one or more programs are executed by the one or more processors, the electronic device is enabled to perform the task scheduling method provided in the first aspect.

It may be understood that the foregoing electronic device may be an electronic device like a server, a mobile phone, or a PC. This is not limited herein.

According to a third aspect, an embodiment of this application provides a computer-readable storage medium.

The storage medium stores instructions, and when the instructions are executed on a computer, the computer is enabled to perform the task scheduling method provided in the first aspect.

According to a fourth aspect, an embodiment of this application provides a computer program product, including a computer program/instructions. When the computer program/instructions is/are executed by a processor, the task scheduling method provided in the first aspect is implemented.

In conclusion, according to the task scheduling solution provided in embodiments of this application, efficiency of allocating computing power resources of CPUs on an electronic device can be effectively improved, a to-be-running task or a running task is scheduled in a timely manner to a CPU with an adapted computing power value for efficient running, and task scheduling can be performed without waiting for a system scheduling period. Therefore, this also facilitates scheduling and running efficiency of each task. In addition, according to the solution in this application, computing power values and corresponding computing power levels may be determined for CPUs of a same microarchitecture, or computing power values and corresponding computing power levels may be determined for CPUs of different microarchitectures. Therefore, a target task may be scheduled to run on a CPU that is of a same microarchitecture or different microarchitectures and that has a matched computing power level, that is, scenario adaptability is stronger.

## BRIEF DESCRIPTION OF DRAWINGS

FIG. 1 is a diagram of an application scenario according to an embodiment of this application;
FIG. 2a is a diagram of an implementation process of a task scheduling solution;
FIG. 2b is a diagram of an implementation process of another task scheduling solution;
FIG. 3 is a diagram of a system architecture of a server according to an embodiment of this application;
FIG. 4A to FIG. 4D are a diagram of a procedure of interaction between some structures in a system shown in FIG. 3 in an implementation process of a task scheduling method according to an embodiment of this application;
FIG. 5 is a diagram of a working principle of monitoring a task load characteristic value by a load characteristic monitor according to an embodiment of this application;
FIG. 6 is a diagram of an implementation procedure in which a load characteristic monitor triggers an interrupt according to an embodiment of this application;
FIG. 7 is a diagram of a working procedure in which a task characteristic computation module initiates task scheduling in response to an interrupt according to an embodiment of this application;
FIG. 8 is a diagram of a working procedure in which a performance-core and efficiency-core scheduler performs task scheduling according to an embodiment of this application;
FIG. 9 is an implementation flowchart of setting a load characteristic monitor after task scheduling is performed according to an embodiment of this application;
FIG. 10 is an implementation flowchart of another task scheduling method according to an embodiment of this application;
FIG. 11 is a diagram of an internal implementation process of a task scheduling method according to an embodiment of this application;
FIG. 12 is a diagram of a hardware structure of a server according to an embodiment of this application;
FIG. 13 is a diagram of a hardware structure of a mobile phone according to an embodiment of this application; and
FIG. 14 is a diagram of a system architecture of a mobile phone according to an embodiment of this application.

## DESCRIPTION OF EMBODIMENTS

To make objectives, technical solutions, and advantages of embodiments of this application clearer, the following describes in detail the technical solutions provided in embodiments of this application with reference to the accompanying drawings and specific implementations of this specification.

To understand the solutions in embodiments of this application more clearly, the following first explains and describes some terms in embodiments of this application.

(1) A performance core and an efficiency core mean a plurality of different CPUs configured in an electronic device. A system may evaluate computing power based on computing capabilities, operation efficiency, and other performance of the CPUs, and classify the CPUs in the electronic device into CPUs at a performance-core computing power level, CPUs at an efficiency-core computing power level, and the like based on the computing power.

It may be understood that, CPUs at a performance-core computing power level correspondingly process tasks with, for example, an extremely large amount of computation and logic determining, and intensive corresponding instructions. Therefore, this type of CPUs are typically referred to as computation-intensive CPUs in the industry.

CPUs at an efficiency-core computing power level typically process tasks with, for example, an extremely large amount of data read and output from a disk or a memory. Therefore, this type of CPUs are typically referred to as I/O-intensive CPUs in the industry.

(2) An interrupt (interrupt) is a mechanism in which during running of a computer, the machine automatically suspends a running program in case of an exception requiring host intervention, and starts handle another program; and the computer resumes the interrupted program after completing the another program.

(3) A task load indicates quantities of computing power resources, storage resources, and the like consumed for task running. It may be understood that, in the case of more computing power resources consumed during task running, that is, in the case of a higher task load, a quantity of CPUs used increases accordingly in the case that all CPUs have equivalent computing power.

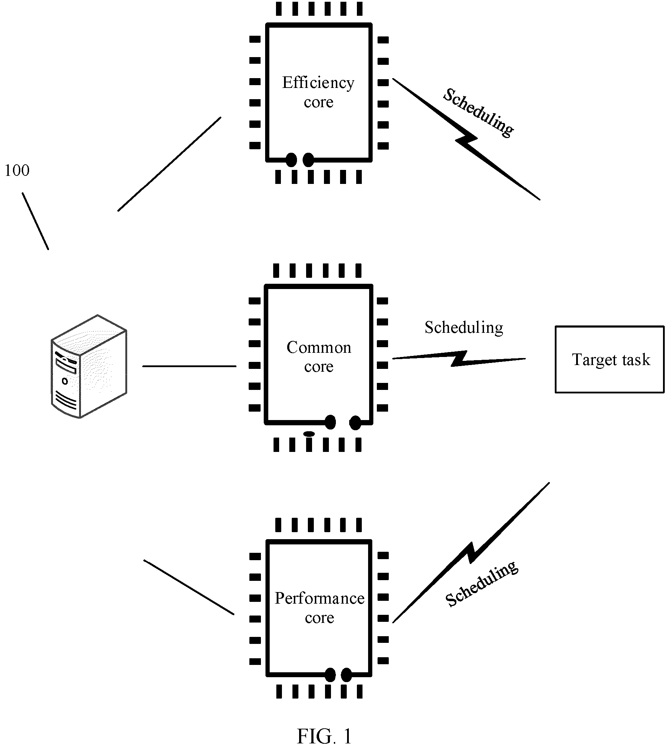

FIG. 1 is a diagram of an application scenario according to an embodiment of this application.

As shown in FIG. 1, a server 100 is included in the scenario. A plurality of CPUs in the server 100 may be classified, based on computing power values, into CPUs at a performance-core computing power level, CPUs at an efficiency-core computing power level, and the like. In some embodiments, some CPUs ranked in the middle in terms of computing power may be classified as common cores. This is not limited herein. When a target task to be executed by the server 100 requires large computing power, for example, when the server 100 needs to run a data processing task or an operation task of a large online game, a performance core needs to be scheduled for execution. When a target task to be executed by the server 100 requires small computing power, for example, when the server 100 needs to run a game scenario loading task of a game application or a calendar data update task of a calendar application, the target task does not need to be queued in a task queue to be processed by the performance core, and the efficiency core may be scheduled for execution, which is faster and more efficient instead.

It may be understood that, in the scenario shown in FIG. 1, in a process in which the server 100 schedules, corresponding to tasks with different computing power requirements, processors with matched computing power values to execute the tasks, this helps prevent some tasks that require few computing resources from occupying task queue positions of a performance-core processor. If a task can run on an efficiency core, but the task cannot be scheduled, in a timely manner, to a corresponding efficiency core for processing, running rates of the task and another task in a task queue in which the task is located are reduced, that is, some tasks that require a large quantity of computing resources may be queued for a long time, and a throughput rate of an entire system is also reduced. However, to achieve effective task scheduling, a load characteristic corresponding to each to-be-processed task needs to be first effectively and timely detected, and then, a CPU with proper computing power is matched based on the load characteristic corresponding to each task, to perform corresponding task processing.

It should be noted herein that, in the context description of embodiments of this application, unless otherwise specified, a "system" or an "operating system" is an operating system carried on an electronic device like a server that implements a data update method provided in embodiments of this application, for example, Linux, a Euler system (openEuler OS), a Windows™ system, a Mac™ system, a Harmony™ system (Harmony OS), an Android™ system, or an iOS™ system. This is not limited herein.

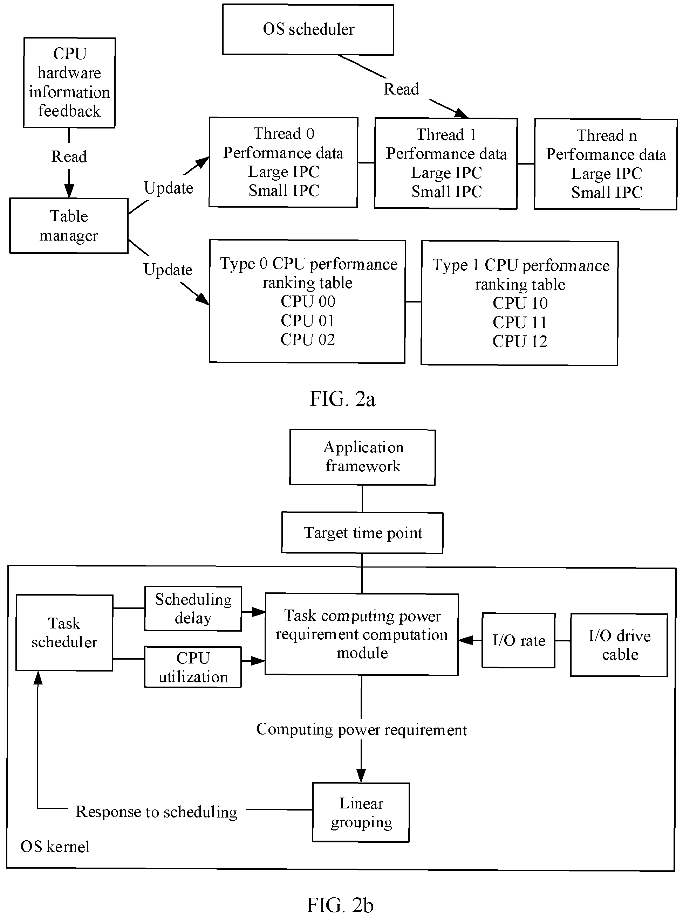

To enable tasks that are executed on different threads by a program running on an electronic device like the server 100 to run on a processor (CPU) with matched computing power, FIG. 2a and FIG. 2b each show a task scheduling solution.

Refer to a task scheduling solution shown in FIG. 2a. In this solution, firmware, namely, a table manager (Table Manager), on an electronic device reads hardware information of CPUs of different microarchitecture types, and performs performance ranking on the CPUs of various types. For example, CPUs of a type 0 are sequentially a CPU 00, a CPU 01, and a CPU 02 in terms of performance rankings; and CPUs of a type 1 are sequentially a CPU 10, a CPU 11, and a CPU 12 in terms of performance rankings. A microarchitecture of the CPU of the type 0 is different from a microarchitecture of the CPU of the type 1. Further, to-be-scheduled task threads are enabled to respectively run on a performance-core CPU and an efficiency-core CPU that are of different microarchitecture types, and performance data on each thread is measured. For example, a quantity of instructions per clock (Instructions Per Clock, IPC) executed by each CPU is measured. Then, based on measured IPC values, a corresponding IPC ratio when tasks run on a performance-core CPU and an efficiency-core CPU of various microarchitecture types may be computed and recorded. In this way, when a to-be-scheduled task needs to run, an OS scheduler reads data like a measured IPC ratio, and schedules, for running, the task to a CPU of a type corresponding to a large IPC ratio. For example, a CPU with a higher performance ranking is selected from the type to run the task. However, in the task scheduling solution, IPC values of the to-be-scheduled tasks when the to-be-scheduled tasks are run on CPUs of different types need to be tested. Therefore, a fixed scheduling period of an operating system for the tasks or the CPUs needs to be adapted. Consequently, scheduling periods of some tasks are long. In addition, in the task scheduling solution, scheduling can be performed only between CPUs of different microarchitecture types, and the task scheduling solution cannot be applied to task scheduling between a performance core and an efficiency core of a same microarchitecture. This leads to a narrow application scope.

Refer to another task scheduling solution shown in FIG. 2b. In this solution, a task computing power requirement computation module is added to an OS kernel, and is responsible for performing computing power evaluation and grouping on threads on which tasks are being executed, so that applications of different types respectively correspond to default thread groups. Further, the task computing power requirement computation module computes, based on information, such as utilization of CPUs on which the threads are located and scheduling delays, that is collected by the OS task scheduler in real time, computing power requirements of tasks on the threads by combining I/O rate information and based on a target time point configured by an application framework of a system, and regroups the threads. Further, the task scheduler may schedule, based on a regrouping result, a task to be scheduled, for running, to a target CPU that has matched computing power and that corresponds to new grouping of the threads. However, the task scheduling solution also needs to adapt to a task scheduling period of the operating system. In addition, the task scheduling solution is not applicable to an open computing scenario supported by a server operating system or the like.

To resolve the foregoing problem, this application provides a task scheduling method, applied to an electronic device having a plurality of processors. Specifically, in the method, when a system of the electronic device starts and runs, computing power values of CPUs are determined based on hardware configuration information of a plurality of the configured CPUs, and the CPUs are classified into CPUs at different computing power levels based on the computing power values. The CPUs at different computing power levels may correspondingly process tasks with different task load sizes. For example, a CPU at a high computing power level may provide a large computing power range, and has a large quantity of computing power resources, and therefore, may correspondingly process a task with a large task load. However, a CPU at a low computing power level may provide a small quantity of computing power resources, and therefore, may correspondingly process a task with a small task load. Based on this, in the method, each computing power level and a task load range in which the computing power level can run are preset, so that before a task is run or in a process of running a task, an idle CPU in CPUs at a corresponding computing power level is matched based on a range to which a task load size of each task belongs, and the task is scheduled to the matched CPU for running.

For the task load range corresponding to each computing power level, after a current task load characteristic value is determined for a target task that is about to run or is running, an identifier may be added to the task based on the task load characteristic value, to mark a task load range to which the task belongs. The identifier may be referred to as a task characteristic identifier. The task load characteristic value may be dynamically determined based on a type of an instruction corresponding to each task, whether a CPU that runs the instruction corresponding to the task successfully executes the corresponding instruction, execution like an execution error type, and the like. It may be understood that the target task may alternatively have an initial task load characteristic value before running, and the initial value may be determined based on task content, an execution parameter preset by the system for the task, and the like. The execution parameter may be, for example, a preset parameter correspondingly preset by the system for specifying that some tasks are scheduled to run on a CPU at a specific computing power level, or that a task runs on a specific CPU.

The computing power values of the CPUs may be determined by combining configuration information of the CPUs, and a computing power range correspondingly covered by a corresponding computing power level may also be properly determined based on distribution of the computing power values of all the CPUs. For example, the computing power values of the CPUs may be comprehensively measured based on aspects such as core frequencies and microarchitectures of the CPUs. For example, measurement may be performed based on computed computing power characteristic values. In this way, a rule for computing a computing power characteristic value may be preset in the system. Then, a CPU whose computing power characteristic value is within a high range is determined as a CPU of a performance-core type, and a CPU whose computing power characteristic value is within a low range is determined as a CPU of an efficiency-core type. In some other embodiments, the plurality of CPUs in the electronic device may alternatively be classified, based on the computed computing power characteristic values, into three types: a performance core, an efficiency core, and a common core whose computing power characteristic value is in a range between the high range and the low range. This is not limited herein.

In this way, according to the solution in this application, efficiency of allocating computing power resources of the CPUs on the electronic device can be effectively improved, a to-be-running task or a running task is scheduled in a timely manner to a CPU with an adapted computing power value for efficient running, and task scheduling can be performed without waiting for a system scheduling period. Therefore, this also facilitates scheduling and running efficiency of each task. In addition, according to the solution in this application, computing power values and corresponding computing power levels may be determined for CPUs of a same microarchitecture, or computing power values and corresponding computing power levels may be determined for CPUs of different microarchitectures. Therefore, a target task may be scheduled to run on a CPU that is of a same microarchitecture and that is at a matched computing power level or a CPU that is of a different microarchitecture and that is at a matched computing power level, that is, scenario adaptability is stronger.

It may be understood that the task load characteristic value of the target task in the running process may be monitored by using a preset load characteristic monitor. The load characteristic monitor may be, for example, a logic computing circuit disposed on a working circuit of each CPU. The load characteristic monitor may obtain count values of a plurality of performance counters of a performance monitor unit (Performance unit, PMU) in a CPU microarchitecture and corresponding register parameters, and compute, by using a preset load characteristic computation model, a real-time task load characteristic value of a task running on each CPU.

When the target task runs on a CPU, the system may invoke a preset load characteristic monitor corresponding to the CPU, to obtain a parameter value in a corresponding register on the CPU, and compute a task load characteristic value of the target task in real time. Further, the system may mark a task characteristic identifier of the target task in a current running status based on the task load characteristic value computed by the load characteristic monitor, to determine whether the target task matches a computing power level of the CPU on which the task currently runs. For example, when the load characteristic value of the target task becomes larger or smaller, a value of a corresponding task characteristic identifier may become larger or smaller. In this case, the system may determine a computing power level that matches a changed task characteristic identifier, and then, the target task is dynamically scheduled, for continuous running, to an idle CPU in CPUs at a corresponding computing power level.

It may be understood that there may be a plurality of preset load characteristic computation models, and the preset load characteristic computation model may be preset in a model library. It may be understood that a model library corresponding to a load characteristic monitor applicable to the performance core may be the same as or different from a model library corresponding to a load characteristic monitor applicable to the efficiency core. Generally, when logical computation related to a load characteristic is performed, a load characteristic computation model selected by the performance-core load characteristic monitor is different from a load characteristic computation model selected by the efficiency-core load characteristic monitor. This is not limited herein.

It may be understood that, in a CPU microarchitecture currently configured in each electronic device, each CPU may be configured with one PMU, and the PMU may include a plurality of PMCs, configured to count a proportion of a quantity of instructions that are obtained, executed, or executed abnormally by the CPU. Specific details are described in detail below, and are not described herein.

It may be understood that an electronic device to which the task scheduling method provided in this application is applicable may include but is not limited to the foregoing server 100, a personal computer (personal computer, PC) (including a laptop computer, a desktop computer, a tablet computer, or the like), a mobile phone, a wearable device, a head-mounted display, a mobile email device, an in-vehicle infotainment device, a portable game console, a portable music player, a reader device, a television set in which a plurality of processors are embedded or to which a plurality of processors are coupled, or another electronic device having a plurality of processors. It may be understood that the electronic device to which the task scheduling method provided in this application is applicable may alternatively be an electronic device like a server that has various heterogeneous processors to provide a computing platform, and is configured to implement an image processing unit (Image Processing Unit, IPU), a deep learning processing unit (Deep learning Processing Unit, DPU), a neural network processing unit (Neural network Processing Unit, NPU), and the like on the electronic device like the server.

For example, when an electronic device performing the foregoing task scheduling method is the server 100, a task suitable for running on the performance core may be, for example, a processing, computing, and analysis task for cloud big data, and a task suitable for running on the efficiency core may be, for example, a page request task for the cloud big data. When the electronic device performing the foregoing task scheduling method is the PC, the task suitable for running on the performance core may be, for example, a data computing task executed based on various preset computation formulas of an Excel application, and the task suitable for running on the efficiency core may be, for example, a data import and storage task of the Excel application. When the electronic device performing the foregoing task scheduling method is the mobile phone, the task suitable for running on the performance core may be, for example, a data processing task of a large online game application, and the task suitable for running on the efficiency core may be, for example, a calendar data update task of a calendar application.

For ease of description, the following still uses the server 100 as an example to describe in detail a specific implementation process of the task scheduling method provided in embodiments of this application.

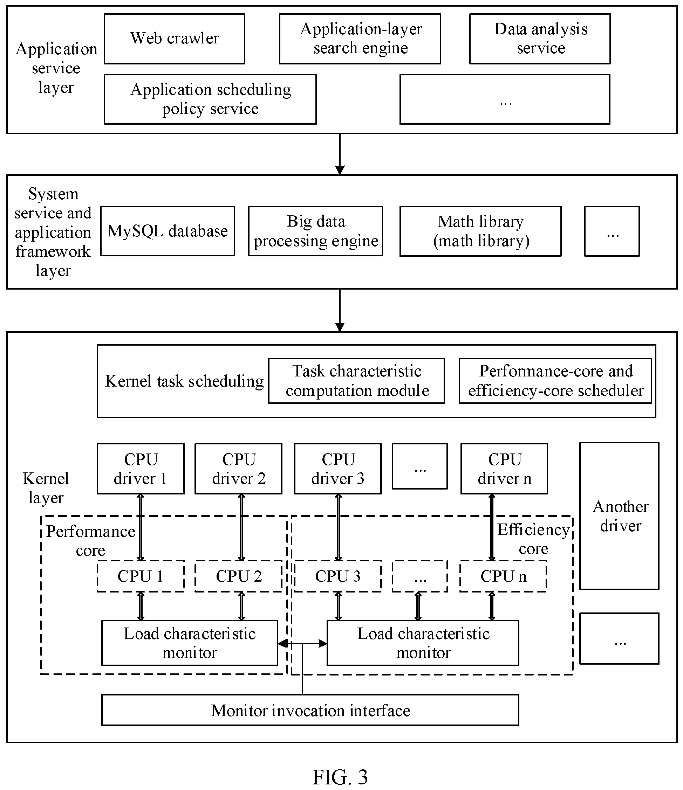

FIG. 3 is a diagram of a system architecture of a server 100 according to an embodiment of this application.

Server operating systems include Unix, Linux, Windows Server, Netware, and the like. In this embodiment of this application, a Linux-based big data server is used as an example to describe an operating system architecture of the server 100.

As shown in FIG. 3, an operating system of the Linux-based big data server may include the following three parts: a kernel layer, a system service and application framework layer, and an application service layer.

The kernel layer is responsible for connecting all applications running in a "user mode" to physical hardware, and allowing processes in the server to obtain information of each other through inter-process communication (IPC). The kernel layer is a core of the operating system and provides many basic functions. For example, the kernel layer is responsible for managing a process, a memory, a device driver, a file, and a network system of the system, and determines performance and stability of the system.

In this embodiment of this application, the kernel layer includes a task characteristic computation module, a performance-core and efficiency-core scheduler, a load characteristic monitor, a monitor invocation interface, and the like.

The task characteristic computation module is configured to: receive a CPU device identifier sent by the performance-core and efficiency-core scheduler, and select a load characteristic monitor corresponding to the CPU device identifier. It may be understood that, in some embodiments, one load characteristic monitor may alternatively be disposed for a plurality of CPUs at a same level, and the load characteristic monitor may establish a corresponding monitoring unit corresponding to each CPU device identifier. This is not limited herein.

Further, the task characteristic computation module may invoke the selected load characteristic monitor through the monitor invocation interface, to monitor a load characteristic corresponding to a currently executed task. It may be understood that, when invoking the load characteristic monitor through the monitor invocation interface, the task characteristic computation module may further configure, for the load characteristic monitor based on a characteristic of the task that currently needs to be monitored and a scheduling policy that is set for the task by an application scheduling policy service, a selection parameter of the load characteristic computation model and a model parameter corresponding to the selected model.

In addition, the task characteristic computation module may further read, based on an interrupt notification sent by the load characteristic monitor, a task load characteristic value monitored by the load characteristic monitor, and generate a task characteristic identifier based on the task load characteristic value and configuration of the system for the task. Further, the task characteristic computation module may determine, based on the generated task characteristic identifier, that the task needs to be scheduled. In this case, the task characteristic computation module sends a task scheduling notification to the performance-core and efficiency-core scheduler. In some other embodiments, the task characteristic computation module may alternatively send the generated task characteristic identifier to the performance-core and efficiency-core scheduler, so that the performance-core and efficiency-core scheduler determines whether the task needs to be scheduled. This is not limited herein. A specific process in which the task characteristic computation module generates the task characteristic identifier, schedules the task, and the like is described in detail below. Details are not described herein.

The performance-core and efficiency-core scheduler is configured to: receive the task scheduling notification sent by the task characteristic computation module, further determine whether the currently executed task matches computing power of the CPU that executes the task, and further determine whether the task needs to be scheduled, for continuous execution, to an idle CPU with more matched computing power. Therefore, the performance-core and efficiency-core scheduler may determine, based on whether the task characteristic identifier corresponds to a level identifier marked on the CPU that currently executes the task, whether the computing power of the CPU that currently executes the task matches the task, and further determine whether the task needs to be scheduled.

When the task needs to be scheduled, the performance-core and efficiency-core scheduler may select, based on a correspondence between the task characteristic identifier and the level identifier of the CPU, an idle target CPU with matched computing power, to schedule the task to the target CPU for continuous running. It may be understood that, if all CPUs selected by the performance-core and efficiency-core scheduler based on the task characteristic identifier are running another task, in this case, the performance-core and efficiency-core scheduler may not schedule the task, that is, task scheduling is not performed. In some other embodiments, the target CPU selected by the performance-core and efficiency-core scheduler based on the task characteristic identifier may alternatively suspend another task, to first process the currently scheduled task. This is not limited herein. Specific details are described in detail below, and are not described herein.

The load characteristic monitor is configured to compute and monitor a real-time load characteristic value corresponding to a task currently processed by a corresponding CPU. As described above, the load characteristic monitor may be, for example, a logic computing circuit disposed on a working circuit of each CPU, and may be disposed in a microarchitecture of a corresponding CPU device, an internal functional module of the CPU, an external dedicated chip, or some firmware. This is not limited herein. The task load characteristic value obtained by the load characteristic monitor through monitoring may be sent to the task characteristic computation module through the monitor invocation interface, so that whether a task characteristic identifier of a corresponding task matches a level identifier of a currently running CPU is determined, and whether to perform task scheduling is further determined. Specific details are described in detail below, and are not described herein.

It may be understood that a CPU driver at the kernel layer may be configured to drive a corresponding CPU device. One CPU driver may be configured to drive a plurality of CPU devices, or one CPU driver may correspondingly drive one CPU device. This is not limited herein. For example, a CPU driver 1 is configured to drive a CPU 1, a CPU driver 2 is configured to drive a CPU 2, a CPU driver 3 is configured to drive a CPU 3, ..., and a CPU driver n is configured to drive a CPU n. The foregoing load characteristic monitors may respectively correspond to monitoring task load characteristics running on the CPU 1, the CPU 2, the CPU 3, ..., and the CPU n. Specific details are described in detail below, and are not described herein.

The monitor invocation interface is configured to configure or invoke the load characteristic monitor on the working circuit of each CPU. It may be understood that the invocation interface may include a plurality of functional interfaces exported based on an MSR register. For example, a corresponding register name, a parameter, and the like may be defined for each MSR register in a CPU correspondingly monitored by a load characteristic monitor, to implement different functions.

Refer to Table 1. For an MSR register in any CPU, "MSR_PMU_BIAS_n" may be defined as a functional interface for reading/writing "a coefficient of an $n^{th}$ PMU Counter". Further, "MSR_PMU_PARAM" may be defined as a functional interface for reading/writing "an initial model value/a historical computation result corresponding to the task", and "MSR_PMU_MODEL_ID" is defined as a functional interface of "computation formula selection", where an ID value may represent a sequence number of a model formula to be selected. For another functional interface included in the monitor invocation interface, refer to an example in the following Table 1. No enumeration is provided herein.

**Table 1**

| Register definition | Register parameter description |
|---|---|
| MSR_PMU_BIAS_n | Coefficient of an $n^{th}$ PMU Counter |
| MSR_PMU_PARAM | Initial model value/Historical computation result corresponding to the task |
| MSR_PMU_MODEL_ID | Computation formula selection, whose value represents a sequence number of a model formula |
| MSR_PMU_MODEL_RESET | PMU model recomputation |
| MSR_PMU_MODEL_STATUS | Model computation result returned during an interrupt |
| MSR_PMU_MODEL_INTERVAL | Computation period, in cycle |
| MSR_PMU_MODEL_THRESHOLD_H | Upper-bound threshold, where if a computation result of a performance model is greater than the threshold, an interrupt is generated |
| MSR_PMU_MODEL_THRESHOLD_L | Lower-bound threshold, where if a computation result of a performance model is less than the threshold, an interrupt is generated |
| MSR_PMU_MODEL_ENABLE | Enabling or disabling of a model computation function |

In some other embodiments, functions of the invocation interface may alternatively be implemented based on a system register. This is not limited herein.

The system service and application framework layer may include parts such as a MySQL database, a big data processing engine, and a math library (math library).

The MySQL database is a relational database management system. All data is stored in different tables instead of in a large repository. This increases a speed and improves flexibility.

The big data processing engine is configured to provide services such as data cleaning, data loading, and data query for a large amount of data input to the system. The big data processing engine may include, for example, query engines such as Phoenix, Stinger, and Presto, distributed scenario processing engines such as Apache Shark and Apache Flink, a Pig loading engine, and an analysis engine. Apache Spark is a distributed open-source processing system for a big data workload, and may provide a unified engine applicable to common data processing scenarios such as batch processing, stream processing, interactive query, and machine learning.

The math library (math library) includes a large quantity of high-performance computation functions, and provides a function basis for big data processing and computing. For example, the high-performance computation function provided by the math library may be used to implement machine learning, construct an AI algorithm with a specific function, and the like.

The application service layer may include some predefined tools, services, or the like. For example, the application service layer may include a web crawler, a search engine, a data analysis service, an application scheduling policy service, and the like.

The web crawler is configured to: read data on a network and store the data in the MySQL database.

The search engine may collect, based on a specific policy, information from the internet by using a specific program. After organizing and processing the information, the search engine may provide a retrieval service for a user, and may display retrieved related information to the user. For example, the search engine can implement crawler data downloading, a retrieval function, and the like.

The data analysis service is configured to invoke data in the math library for data analysis and statistics computation. Generally, a large amount of computation is required. In some cases, the data analysis service also invokes related data in the Apache Spark computing engine for data analysis and statistics computation.

It may be understood that the operating system that is applied to a big data server or the like and that is shown in FIG. 3 may provide services in various aspects such as data processing, data computing, and data analysis. Therefore, various types of applications may run in the operating system based on a user requirement, and accordingly, the running applications may implement various functions based on the user requirement. Therefore, the operating system that is applied to a big data server or the like and that is shown in FIG. 3 may alternatively be referred to as an open computing operating system.

The application scheduling policy service is configured to preset, based on a system running requirement, a scheduling condition for a task of each application running in the system. For example, to ensure quick response from some system applications, the system may limit, by using the application scheduling policy service, that each task of the system application runs only on an efficiency core. Correspondingly, the task characteristic computation module may combine the foregoing task scheduling policies preset by the application scheduling policy service, and no longer schedule a corresponding task to a performance core for running.

It may be understood that, in some embodiments, the Linux operating system may divide the Linux operating system into two parts in a process of running an application. One part is core software, namely, a kernel, and also referred to as kernel space. The other part is a common application, and this part is referred to as user space. A purpose of distinguishing the user space from the kernel space is to ensure system security.

When an application process executes a system invocation and is trapped in kernel code for execution, the process is referred to as being in a kernel running state (or a kernel state for short). In this case, the processor performs execution in the kernel code at a highest privilege level (level of RING 0). When the process is in the kernel state, the executed kernel code uses a kernel stack of the current process.

It may be understood that each process has a kernel stack of the process. When the process executes code of the user, the process is referred to as being in a user running state (user state). In this case, the processor runs in the user code at a lowest privilege level (level of RING 3). When a user program is being executed and is suddenly interrupted by an interrupt program, the user program may also be symbolically referred to as being in the kernel state of the process, because an interrupt processing program uses a kernel stack of the current process.

It may be understood that, on the server 100 to which the Linux operating system is applied, the processor is always in one of the following states: (1) the kernel state, running in a process context, where a kernel represents that a process runs in the kernel space; (2) the kernel state, running in an interrupt context; and (3) the user state, running in the user space.

Therefore, there may be two trigger means from the user space to the kernel space. A first trigger means is system invocation. That is, an application in the user space may enter the kernel space through the system invocation. In this case, processes in the user space need to transfer a plurality of variables and parameter values to the kernel. When the kernel is running, some register values and variables of user processes also need to be stored. Therefore, the foregoing "process context" means a parameter transferred by the user process to the kernel, variables and register values stored when the kernel is running, an environment at a running moment, and the like. A second trigger means is an interrupt. That is, hardware can trigger a signal to enable the kernel to invoke the interrupt processing program, to enter the kernel space. For example, a network adapter sends a data packet, or a hard disk drive provides an I/O request. In this process, some variables and parameters of the hardware need to be transferred to the kernel, and the kernel performs interrupt processing based on these parameters. Therefore, the foregoing "interrupt context" means the parameter transferred by the hardware, an environment of a process that is currently interrupted in execution and that needs to be stored by the kernel, and the like.

It may be understood that, in a process in which the server 100 implements the task scheduling method provided in this embodiment of this application, when the system of the server 100 learns, through monitoring, that a real-time task load characteristic value meets an interrupt triggering condition, the system may also comply with a processing mechanism of the foregoing "process context" and/or "interrupt context", to trigger CPU context switching correspondingly triggered by the interrupt. This is not described herein.

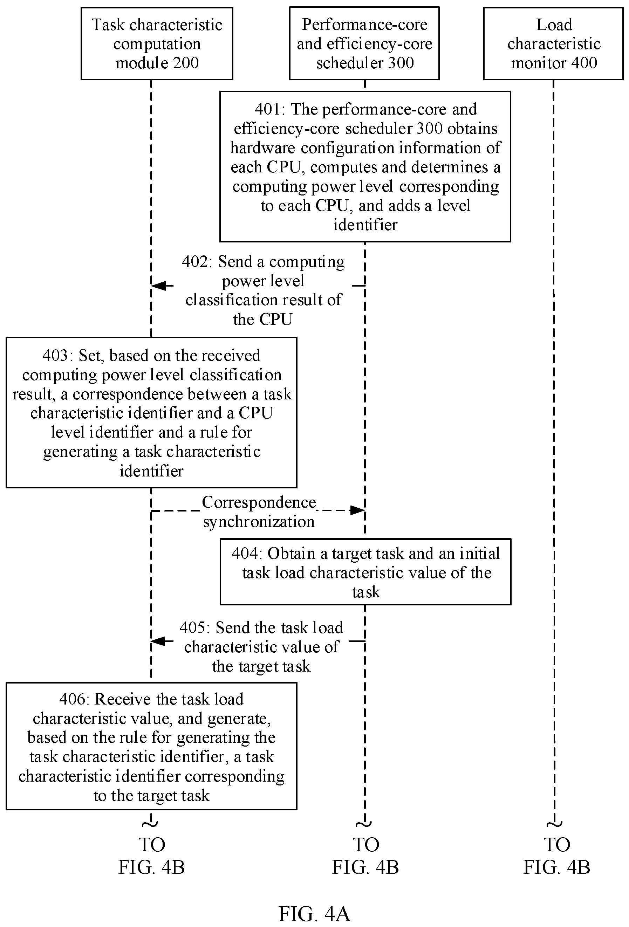

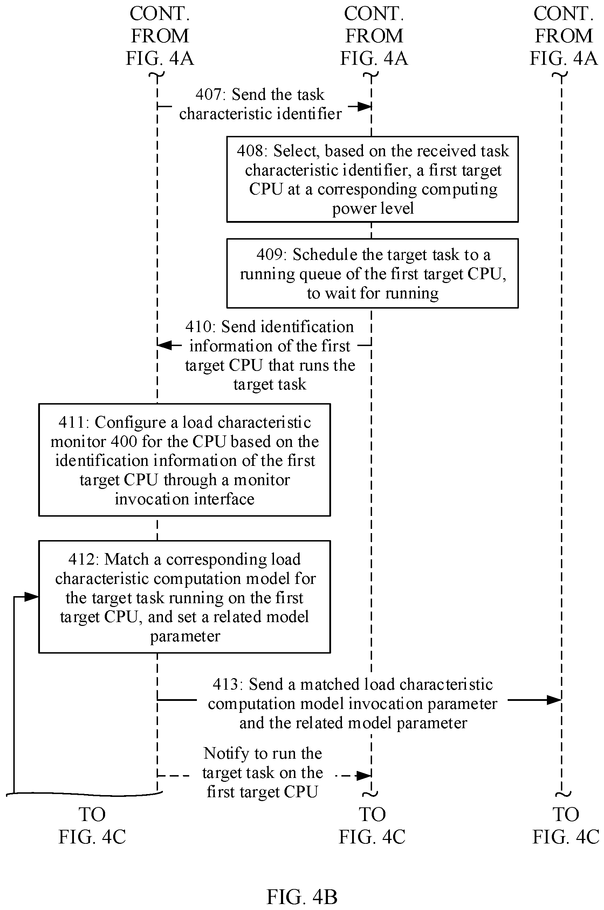

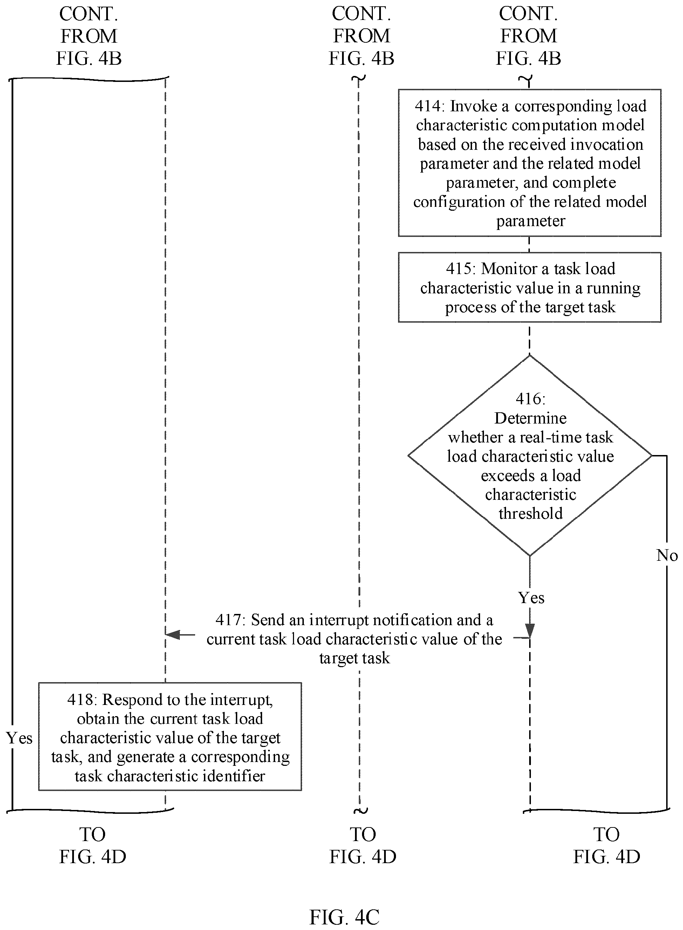

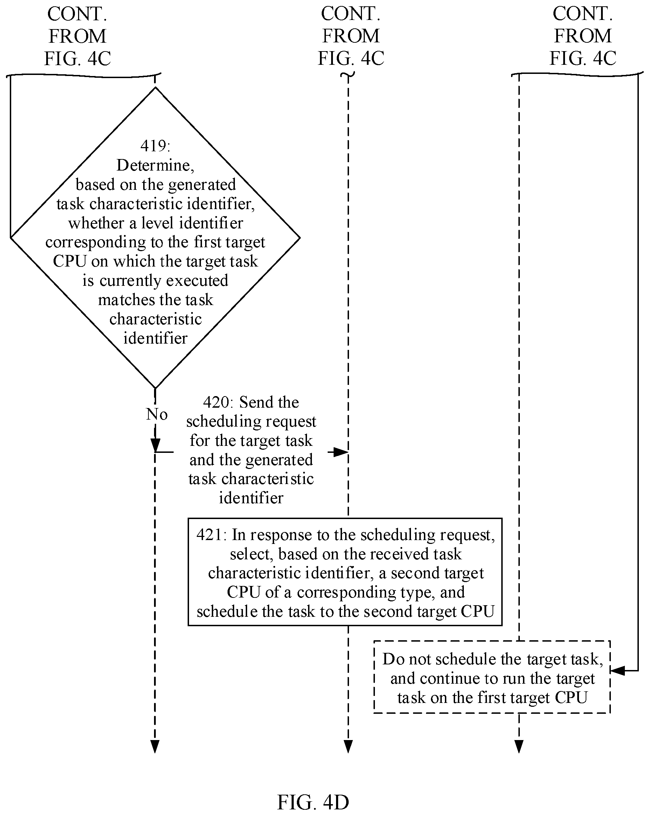

Based on the foregoing system architecture shown in FIG. 3, the following describes in detail a specific implementation process of the task scheduling method provided in embodiments of this application with reference to a diagram of a procedure of interaction between some structures in the foregoing system. For ease of clear description, execution entities in steps in the procedure of interaction in FIG. 4A to FIG. 4D are numbered, namely, a task characteristic computation module 200, a performance-core and efficiency-core scheduler 300, and a load characteristic monitor 400.

FIG. 4A to FIG. 4D are a diagram of a procedure of interaction between some structures in a system shown in FIG. 3 in an implementation process of a task scheduling method according to an embodiment of this application.

As shown in FIG. 4A to FIG. 4D, the procedure specifically includes the following steps.

401: A performance-core and efficiency-core scheduler 300 obtains hardware configuration information of each CPU, computes and determines a computing power level corresponding to each CPU, and adds a level identifier.

For example, when a system of the server 100 is started, the performance-core and efficiency-core scheduler 300 may obtain the hardware configuration information of each CPU from a basic input/output system (Basic Input/Output System, BIOS), and may further compute a computing power characteristic value of each CPU based on a preset computing rule. For example, for the computing rule, refer to the following computation relational expression:

Computing power characteristic value of a CPU = Frequency * Microarchitecture computing power.

The frequency for computing the computing power characteristic value of the CPU may be a core frequency of the CPU, namely, a dominant frequency, or may be an operating frequency of the CPU. In addition, the foregoing computed computing power characteristic value of the CPU may alternatively be understood as computing energy efficiency of the CPU to some extent. This is not limited herein. It may be understood that the computing power characteristic value that corresponds to each CPU and that is computed and determined by the performance-core and efficiency-core scheduler 300 may be used to determine a computing power level of a corresponding CPU. Further, the level identifier is added to each CPU.

For example, two computing power levels and two corresponding level identifiers may be preset in the system. For example, CPUs whose computing power characteristic values are in a range of [512, 1024] are at a same computing power level, and a performance-core level identifier may be added to this type of CPU. CPUs whose computing power characteristic values are in the range of [0, 512) are at a same computing power level, and an efficiency-core level identifier may be added to this type of CPU. In some embodiments, three computing power levels and three corresponding level identifiers may alternatively be preset in the system. For example, a performance-core level identifier is correspondingly added to a CPU whose computing power characteristic value is in a range of (512, 1024], an efficiency-core level identifier is correspondingly added to a CPU whose computing power characteristic value is in a range of [0, 512), and a common-core level identifier may be correspondingly added to a CPU whose computing power characteristic value is 512. This is not limited herein.

In some other embodiments, level identifiers may alternatively be added to CPUs at different computing power levels in another manner. For example, a CPU at a performance-core level may be marked as "1", a CPU at an efficiency-core level may be marked as "-1", and a CPU at a common-core level may be marked as "0". This is not limited herein.

402: The performance-core and efficiency-core scheduler 300 sends a computing power level classification result of the CPU to the task characteristic computation module 200. The computing power level classification result includes at least the following: identification (identification, ID) information of each CPU, the level identifier added to each CPU, and a computing power characteristic value range correspondingly marked by each level identifier.

For example, after performing the foregoing step 401 of determining the computing power level for each CPU and adding the level identifier to the CPU, the performance-core and efficiency-core scheduler 300 may send the identification information of each CPU and the level identifier added to each CPU to the task characteristic computation module 200. Further, the task characteristic computation module 200 may identify each CPU based on the identification information of the CPU, and may continue to perform the following step 403, to determine a correspondence between a to-be-processed task characteristic identifier and a received CPU level identifier.

403: The task characteristic computation module 200 sets, based on the received computing power level classification result, a correspondence between a task characteristic identifier and a CPU level identifier and a rule for generating a task characteristic identifier. The correspondence may be synchronized to the performance-core and efficiency-core scheduler 300, for scheduling an initial target task.

For example, the task characteristic computation module 200 may set, based on the received computing power characteristic value range correspondingly marked by each CPU level identifier, a corresponding task characteristic identifier to correspond to the CPU level identifier. The task characteristic identifier is used to mark a task load characteristic value range that matches a computing power characteristic value range of a CPU at a corresponding computing power level. For example, it is determined, in the foregoing step 401, that the computing power characteristic value range corresponding to the performance-core level identifier is (512, 1024]. In this case, the task characteristic computation module 200 may preset a task characteristic identifier, for example, a type-A task, corresponding to the performance-core level identifier, and also set a task load characteristic value range corresponding to the type-A task to (512, 1024]. Similarly, the task characteristic computation module 200 may preset a type-B task corresponding to the efficiency-core level identifier, and preset a task load characteristic value range corresponding to the type-B task to [0, 512). In addition, the task characteristic computation module 200 presets a type-C task corresponding to the common-core level identifier, and preset a task load characteristic value corresponding to the type-C task to 512.

In some other embodiments, the task characteristic identifier and the corresponding task load characteristic value range that are preset by the task characteristic computation module 200 may alternatively be other interval values that are different from the computing power characteristic range marked by the corresponding CPU level identifier. For example, the task characteristic computation module 200 may preset a task load characteristic value range of (50, 100] corresponding to the type-A task, may preset a task load characteristic value range of [0, 50) corresponding to the type-B task, and may preset a task load characteristic value of 50 corresponding to the type-C task. This is not limited herein.

It may be understood that, in a process of setting the task load characteristic value range corresponding to each task characteristic identifier, the task characteristic computation module 200 may further set the rule for generating the task characteristic identifier. The rule may be generating a corresponding task characteristic identifier based on a range to which the task load characteristic value belongs, or may be generating a corresponding task characteristic identifier based on the task load characteristic value and a task scheduling policy provided by the application scheduling policy service of the system. This is not limited herein. The generating a corresponding task characteristic identifier based on the task load characteristic value and a task scheduling policy provided by the application scheduling policy service of the system may be, for example, generating the corresponding task characteristic identifier by first considering a correspondence between a task defined by the task scheduling policy and a CPU at a corresponding computing power level.

In some other embodiments, a characteristic identifier may alternatively be generated for each task in another manner. For example, a task characteristic identifier determined as a performance-core task may be marked as "1", and a task characteristic identifier determined as an efficiency-core task may be marked as "-1". This is not limited herein.

It may be understood that the task characteristic identifier determined as the performance-core task corresponds to a performance-core computing power level in CPU computing power levels, and the task characteristic identifier determined as the efficiency-core task corresponds to an efficiency-core computing power level in the CPU computing power levels.

In some embodiments, the task load characteristic value and the generated task characteristic identifier are recorded in a task structure. The task structure includes the task load characteristic value, the task characteristic identifier, and another task-related parameter. This is not limited herein.

404: The performance-core and efficiency-core scheduler 300 obtains a target task and an initial task load characteristic value of the task.

For example, in a system running process, all types of tasks may be scheduled and allocated by using the performance-core and efficiency-core scheduler 300. A scheduled target task may be a task executed on a process corresponding to specific software or a specific application, or scheduled targets tasks may be tasks separately executed on a plurality of threads corresponding to corresponding software or a corresponding application. This is not limited herein. When obtaining the target task, the performance-core and efficiency-core scheduler 300 may determine, based on an initial task parameter or task-related information of the task, a task load characteristic value corresponding to the task.

It may be understood that the initial task load characteristic value may be an initial load characteristic value, or may be a load characteristic value that is set by the application scheduling policy service for a corresponding task based on a system running requirement. In some other embodiments, the application scheduling policy service may alternatively add a task scheduling mark to the target task, to schedule the task in place of the initial task load characteristic value, or the like. This is not limited herein.

It may be understood that the foregoing application task scheduling mark may be, for example, a mark indicating that a specific task is specified to a specific type of CPU or a specific CPU for running. For example, after a corresponding scheduling mark is set for a task by using the application scheduling policy service, the task characteristic computation module 200 may determine, based on the scheduling mark, a specific type of a CPU or a specific CPU on which the task is specified to be executed, and no longer dynamically schedule the task based on a load characteristic value. Correspondingly, the load characteristic monitor 400 may no longer monitor a change of the load characteristic value of the task, and the performance-core and efficiency-core scheduler 300 may allocate the task to a specified CPU for execution during initial allocation of the task, and no longer dynamically schedule the task.

For example, the task scheduling policy set by the application scheduling policy service is to execute running of a task on a performance core. However, the performance-core and efficiency-core scheduler 300 or the task characteristic computation module 200 determines, based on a load characteristic value at an initial moment or in a running process of the task, that the task is actually more suitable for running on an efficiency core. However, because of a task scheduling policy priority principle set by the application scheduling policy service, the task continues to run on the performance core, and is not scheduled to the efficiency core.

405: The performance-core and efficiency-core scheduler 300 sends the task load characteristic value of the target task to the task characteristic computation module 200.

For example, the performance-core and efficiency-core scheduler 300 may send, to the task characteristic computation module 200, a task structure corresponding to the target task, where the task structure may include the task load characteristic value corresponding to the target task. The task characteristic computation module 200 may determine a corresponding task characteristic identifier based on the task load characteristic value. In addition, the task structure may also be edited by the task characteristic computation module 200. For example, the task characteristic computation module 200 may write, into the task structure, the task characteristic identifier determined based on the task load characteristic value. Specific details are described in detail below, and are not described herein. In some other embodiments, the performance-core and efficiency-core scheduler 300 may alternatively send the obtained task load characteristic value corresponding to the target task to the task characteristic computation module 200 in a function invocation manner or the like. This is not limited herein. A specific process of determining the task characteristic identifier is described in detail in the following corresponding step. Details are not described herein.

It may be understood that the task load characteristic value may be an initialized load characteristic value of the target task, or may be a task load characteristic value set by the application scheduling policy service of the system for the target task. This is not limited herein.

It may be understood that, in some embodiments, the task characteristic computation module 200 obtains the task load characteristic value of the target task based on the task structure sent by the performance-core and efficiency-core scheduler 300. This is not limited herein.

406: The task characteristic computation module 200 receives the task load characteristic value sent by the performance-core and efficiency-core scheduler 300, and generates, based on the rule for generating the task characteristic identifier, a task characteristic identifier corresponding to the target task.

For example, the task characteristic computation module 200 may generate a corresponding task characteristic identifier for the received task load characteristic value based on the rule that is for generating the task characteristic identifier and that is set in step 403. It may be understood that, if it is preset in the rule for generating the task characteristic identifier that the task scheduling policy provided by the application scheduling policy service is preferred, when generating the task characteristic identifier, the task characteristic computation module 200 further needs to combine the task scheduling policy set by the application scheduling policy service for the target task. For a specific process of generating the task characteristic identifier, refer to related descriptions in step 403. Details are not described herein.

For example, if the task load characteristic value of the target task is in a range of [0, 512), the task characteristic computation module 200 may add a type-B task characteristic identifier to the task. If the application scheduling policy service of the system sets that the target task needs to be executed by the performance core, the task characteristic computation module 200 may add a type-A task characteristic identifier to the task. In this way, the task characteristic computation module 200 may generate, based on the task scheduling mark, a task characteristic identifier with the mark, and return the task characteristic identifier with the mark to the performance-core and efficiency-core scheduler 300.

In some embodiments, the generated task characteristic identifier is recorded in the task structure of the task. This is not limited herein.

In some other embodiments, when identifying the task scheduling mark on the target task, the performance-core and efficiency-core scheduler 300 may alternatively directly schedule the target task to an executing CPU for running, and does not need to determine a corresponding task characteristic identifier by using the task characteristic computation module 200. This is not limited herein.

407: The task characteristic computation module 200 sends the generated task characteristic identifier to the performance-core and efficiency-core scheduler 300.

For example, the task characteristic computation module 200 may add the generated task characteristic identifier to a corresponding task structure, and send the task structure to the performance-core and efficiency-core scheduler 300. Further, the performance-core and efficiency-core scheduler 300 may read, from the received task structure, the task characteristic identifier corresponding to the target task, to perform task scheduling. In some other embodiments, the task characteristic computation module 200 may alternatively transfer the generated task characteristic identifier to the performance-core and efficiency-core scheduler 300 in a function invocation manner or the like. This is not limited herein.

408: The performance-core and efficiency-core scheduler 300 selects, based on the received task characteristic identifier, a first target CPU at a corresponding computing power level.

For example, based on the received task characteristic identifier sent by the task characteristic computation module 200, the performance-core and efficiency-core scheduler 300 may match, based on a correspondence synchronized after the task characteristic computation module 200 performs step 403, a type of CPU correspondingly marked by a CPU level identifier corresponding to the task characteristic identifier, namely, a type of CPU with matched computing power. Further, the performance-core and efficiency-core scheduler 300 may select an idle CPU from matched CPUs of this type as the first target CPU for task scheduling. The idle CPU may be, for example, a CPU whose task queue is idle, or a CPU that is currently not executing a task. This is not limited herein.

For example, if the task characteristic identifier received by the performance-core and efficiency-core scheduler 300 is the type-A task, the performance-core and efficiency-core scheduler 300 may match, based on a correspondence between the type-A task and a performance-core level identifier, CPUs marked by the performance-core level identifier. Further, the performance-core and efficiency-core scheduler 300 may select a currently idle first target CPU from the matched CPUs at the performance-core computing power level.

409: The performance-core and efficiency-core scheduler 300 schedules the target task to a running queue of the first target CPU, to wait for running.

For example, the performance-core and efficiency-core scheduler 300 schedules, based on the first target CPU selected in step 408, the target task to the running queue of the first target CPU, to wait for running.

410: The performance-core and efficiency-core scheduler 300 sends, to the task characteristic computation module 200, identification information of the first target CPU that runs the target task.

For example, when determining that the target task runs on the first target CPU, the performance-core and efficiency-core scheduler 300 may write the identification information of the selected first target CPU into the task structure, and send the identification information to the task characteristic computation module 200. The task characteristic computation module 200 may determine, based on the received task structure, the first target CPU to which the target task is currently scheduled. The identification information may be, for example, a device (device) ID of the first target CPU. This is not limited herein.

411: The task characteristic computation module 200 configures a load characteristic monitor 400 for the CPU based on the identification information of the first target CPU through the monitor invocation interface.

For example, the task characteristic computation module 200 selects a corresponding CPU load characteristic monitor 400 based on the identification identifier that is of the first target CPU and that is sent by the performance-core and efficiency-core scheduler 300, and invokes the monitor invocation interface. The monitor invocation interface in this application can be used to select a load characteristic computation model, set a model, and receive an interrupt notification. Communication between the task characteristic computation module 200 and the load characteristic monitor 400 is implemented through the monitor invocation interface.

412: The task characteristic computation module 200 matches a corresponding load characteristic computation model for the target task running on the first target CPU, and sets a related model parameter.

For example, the task characteristic computation module 200 may match a proper load characteristic computation model for the task based on a running scenario of the target task running on the first target CPU. Specifically, the task characteristic computation module 200 selects a value of an MSR_PMU_MODEL_ID register defined in Table 1. The value of the MSR_PMU_MODEL_ID register represents a sequence number of a selected load characteristic computation model formula. The MSR_PMU_MODEL_ID register determines a quantity of required counters based on a determined load characteristic computation model. The task characteristic computation module 200 determines a matched load characteristic computation model, and sets an initial computing parameter for the model based on an initial task load characteristic value of the task or a historical task load characteristic value of the task. The initial computing parameter may be, for example, a weight coefficient of each variable in the model.

It may be understood that the load characteristic computation model may be selected based on a running scenario and a task characteristic identifier of a corresponding task. In some embodiments, the server 100 is used as an example. The task characteristic computation module 200 may select a proper load characteristic computation model for a corresponding task based on a specific application run by the server 100, a specific task that is of the application and that is executed by the server 100, and the like. A PC is used as an example. The task characteristic computation module 200 may select, based on a software program running on the PC, a task characteristic identifier corresponding to a task for executing the software, and the like, a load characteristic computation model suitable for the task. For same tasks executed on different electronic devices, correspondingly selected load characteristic computation models may be different. This is not limited herein.

It may be understood that, in some other embodiments, the system may alternatively select, based on a model parameter corresponding to each load characteristic computation model, a default load characteristic computation model for the first target CPU during initialization of the task characteristic computation module, and complete setting of a related parameter of each MSR register corresponding to the first target CPU. Further, when a task running on the first target CPU is switched, for example, switched from another originally running task to the target task, only an MSR_PMU_MODEL_RESET register needs to be set, to trigger the load characteristic monitor 400 to re-compute a load characteristic value by using a corresponding load characteristic computation model.

Specifically, selection of the load characteristic computation model is related to types of task instructions correspondingly executed by the first target CPU that executes the target task and an execution statistical result. A specific process of selecting the load characteristic computation model and setting a related model parameter is described in detail below with reference to a corresponding accompanying drawing. Details are not described herein.

413: The task characteristic computation module 200 sends a matched load characteristic computation model invocation parameter and a related model parameter to the load characteristic monitor 400.

For example, the task characteristic computation module 200 may send the matched load characteristic computation model invocation parameter and the set related model parameter to the invoked load characteristic monitor 400 through the monitor invocation interface.

In addition, when sending the matched load characteristic computation model invocation parameter and the related model parameter to the load characteristic monitor 400, the task characteristic computation module 200 may further notify the performance-core and efficiency-core scheduler 300 to start to run a task. The performance-core and efficiency-core scheduler 300 may control the scheduled first target CPU to select the target task from the task queue to start running.

It may be understood that, in a process of running the target task, the first target CPU may perform context switching based on the task queue, to select the target task to start running. Details are not described in this application.

414: The load characteristic monitor 400 invokes a corresponding load characteristic computation model based on the received invocation parameter and the related model parameter, and completes configuration of the related model parameter.

For example, the load characteristic monitor 400 may determine, from a plurality of preset load characteristic computation models based on the received load characteristic computation model invocation parameter and the related model parameter that are sent by the task characteristic computation module 200, a load characteristic computation model corresponding to the invocation parameter for invocation, and configure a related parameter in the model based on the received related model parameter. The configuration process may include: for example, configuring a quantity of related counters, and setting a corresponding definition and a corresponding parameter value for each counter. This is not limited herein.

415: The load characteristic monitor 400 monitors a task load characteristic value in a running process of the target task.

For example, after the target task starts to run on the first target CPU, the load characteristic monitor 400 may read data such as a count value of a register logic unit corresponding to the first target CPU. A combinatorial logic circuit automatically inputs the read data to a logical computing unit, and automatically performs computation based on the configured load characteristic computation model.

The load characteristic monitor 400 may perform, by using the load characteristic computation model with the configured model parameter, computation based on a computation period that is set corresponding to the model and that is in an MSR_PMU_MODEL_INTERVAL register defined in Table 1, and store a computed current task load characteristic value in an MSR_PMU_MODEL_STATUS register defined in Table 1. A specific load characteristic computation model process is described in detail below with reference to a corresponding accompanying drawing. Details are not described herein.

416: The load characteristic monitor 400 determines whether a real-time task load characteristic value exceeds a load characteristic threshold. If a determining result is "Yes", it indicates that the target task may need to be scheduled, and the following step 416 is performed to initiate an interrupt. If a determining result is "No", it indicates that the target task does not need to be scheduled, and the target task may continue to run on the first target CPU on which the target task currently runs.

For example, the load characteristic threshold may be, for example, a load characteristic threshold in a corresponding register that is configured based on the model parameter in step 414, or a load characteristic threshold included in a model parameter that is set corresponding to the load characteristic computation model selected in step 411. If a computed task load characteristic value exceeds the threshold, it indicates that the target task may need to be scheduled, and an interrupt needs to be triggered for further confirmation. Conversely, if computed a task load characteristic value does not exceed the threshold, the target task continues to run on the first target CPU.

Refer to Table 1. For example, if the first target CPU on which the target task currently runs is an efficiency core, when performing step 411, the task characteristic computation module 200 may set an upper-bound threshold corresponding to an "MSR_PMU_MODEL_THRESHOLD_H" register defined in Table 1. Further, when a task load characteristic value obtained by the load characteristic monitor 400 through monitoring is greater than the upper-bound threshold, it may be determined that the target task may be more suitable for running on a performance core, and the following step 416 may need to be performed to trigger an interrupt, to schedule the target task to the performance core for continuous running.

For another example, if the first target CPU on which the target task currently runs is a performance core, when performing step 411, the task characteristic computation module 200 may set a lower-bound threshold corresponding to an "MSR_PMU_MODEL_THRESHOLD_L" register defined in Table 1. Further, when a task load characteristic value obtained by the load characteristic monitor 400 through monitoring is less than the lower-bound threshold, it may be determined that the target task may be more suitable for running on an efficiency core, and an interrupt may need to be triggered to schedule the target task to the efficiency core for continuous running. A specific process in which the load characteristic monitor 400 computes, based on the load characteristic computation model, the real-time load characteristic value corresponding to the target task is described in detail below. Details are not described herein.

417: The load characteristic monitor 400 sends an interrupt notification and a current task load characteristic value of the target task to the task characteristic computation module 200.

For example, the load characteristic monitor 400 may send the interrupt notification to the task characteristic computation module 200, to initiate an interrupt. In addition, when sending the interrupt notification to the task characteristic computation module 200, the load characteristic monitor 400 may also send a computed current task load characteristic value of the target task to the task characteristic computation module 200. A specific process in which the load characteristic monitor 400 initiates the interrupt is described in detail below. Details are not described herein.

In some other embodiments, if the load characteristic monitor 400 implements a corresponding function by using an external dedicated chip and some firmware, the load characteristic monitor 400 may initiate the interrupt by invoking an interrupt function. This is not limited herein.

418: The task characteristic computation module 200 responds to the interrupt, obtains the current task load characteristic value of the target task, and generates a corresponding task characteristic identifier.

For example, when receiving the interrupt notification sent by the load characteristic monitor 400, the task characteristic computation module 200 may respond to the interrupt, read, through the monitor invocation interface, the current task load characteristic value recorded in the MSR_PMU_MODEL_STATUS register, and generate a current task characteristic identifier of the target task with reference to a task scheduling policy corresponding to the target task.

419: The task characteristic computation module 200 determines, based on the generated task characteristic identifier, whether a level identifier corresponding to the first target CPU on which the target task is currently executed matches the task characteristic identifier. If a determining result is "Yes", that is, when the level identifier corresponding to the first target CPU on which the target task is currently executed matches the task characteristic identifier, the target task does not need to be scheduled, and step 412 may be performed again, to keep monitoring the task load characteristic value of the target task. If a determining result is "No", that is, when the level identifier corresponding to the first target CPU on which the target task is currently executed does not match the task characteristic identifier, the target task needs to be scheduled, and the following step 420 may continue to be performed, to send a scheduling request and the generated task characteristic identifier to the performance-core and efficiency-core scheduler 300.

For example, the task characteristic computation module 200 may determine, based on the generated task characteristic identifier and a correspondence that is between a task characteristic identifier and a CPU level identifier and that is stored in the task characteristic computation module 200, whether a computing power characteristic value provided by the first target CPU on which the target task currently runs matches the task load characteristic value, and further determine whether the target task needs to be scheduled. If the target task needs to be scheduled, the task characteristic computation module 200 may perform the following step 420 to generate a scheduling request and a task characteristic identifier, and send the scheduling request and the task characteristic identifier to the performance-core and efficiency-core scheduler 300.

If the task does not need to be scheduled, the task characteristic computation module 200 may further determine a reason for which the task does not need to be scheduled. For example, in some embodiments, the reason for which the task does not need to be scheduled may be as follows: In a task running process, the user changes a task scheduling policy through an operating system management interface. For example, the task runs on an efficiency core, and the task characteristic computation module 200 determines that the task needs to be scheduled to a performance core for running. However, the user changes the task scheduling policy to restrict the task to run on the efficiency core. In this case, the task does not need to be scheduled, and continues running on the efficiency core. In some other embodiments, the reason for which the task does not need to be scheduled may be as follows: When the task characteristic computation module 200 sets a preset threshold corresponding to the load characteristic computation model, the threshold is set too low. In this case, only a proper threshold needs to be reset, and scheduling does not need to be performed. In some other embodiments, the reason for which the task does not need to be scheduled may alternatively be as follows: The application scheduling policy service sets that the load characteristic monitor 400 needs to monitor the task load characteristic value at the beginning, and after periodic monitoring, the application scheduling policy service indicates to disable monitoring on the task load characteristic value. In this case, the task does not need to be scheduled either. This is not limited herein.

In some other embodiments, the task characteristic computation module 200 may send the task characteristic identifier generated based on the current task load characteristic of the target task to the performance-core and efficiency-core scheduler 300, so that the performance-core and efficiency-core scheduler 300 determines whether task scheduling needs to be performed.

420: The task characteristic computation module 200 sends the scheduling request for the target task and the generated task characteristic identifier to the performance-core and efficiency-core scheduler 300.

For example, based on the determining in step 419, the task characteristic computation module 200 may send, to the performance-core and efficiency-core scheduler 300, the scheduling request for the target task and an updated task structure corresponding to the target task. The task structure may include the task characteristic identifier newly generated in step 418.

In some other embodiments, the task characteristic computation module 200 may alternatively send the foregoing scheduling request and the newly generated task characteristic identifier to the performance-core and efficiency-core scheduler 300 in a function invocation manner or the like. This is not limited herein.

421: In response to the scheduling request, the performance-core and efficiency-core scheduler 300 selects, based on the received task characteristic identifier, a second target CPU at a corresponding computing power level, and schedules the task to the second target CPU.

For example, after receiving the scheduling request and the task characteristic identifier that are sent by the task characteristic computation module 200, the performance-core and efficiency-core scheduler 300 matches a type of CPU correspondingly marked by a CPU level identifier corresponding to the task characteristic identifier, namely, a type of CPU with matched computing power. Further, the performance-core and efficiency-core scheduler 300 may select an idle CPU from matched CPUs of this type as the second target CPU for task scheduling. The idle CPU may be, for example, a CPU whose task queue is idle, or a CPU that is currently not executing a task. This is not limited herein.

For example, if the task characteristic identifier received by the performance-core and efficiency-core scheduler 300 is the type-B task, the performance-core and efficiency-core scheduler 300 may match, based on a correspondence between the type-B task and a performance-core level identifier, CPUs marked by the performance-core level identifier.

Further, the performance-core and efficiency-core scheduler 300 may select an idle second target CPU from the matched CPUs at the performance-core computing power level, and schedule the task to the second target CPU. Specific scheduling implementation steps are described in detail in another flowchart. Details are not described herein.

It may be understood that, in some other embodiments, the performance-core and efficiency-core scheduler 300 may receive only the task characteristic identifier sent by the task characteristic computation module 200, and then determine, based on the received task characteristic identifier, whether the target task needs to be scheduled. Further, when the target task needs to be scheduled, the performance-core and efficiency-core scheduler 300 may select, based on the task characteristic identifier, a second target CPU at a corresponding computing power level, and complete scheduling.

After the foregoing step 421 is completed, the system of the server 100 may repeat the foregoing steps 411 to 414, invoke a load characteristic monitor of the second target CPU, select a load characteristic computation model to be used and set a related model parameter for the load characteristic monitor based on information about the target task, and the like. For details, refer to related descriptions in steps 411 to 414. Details are not described herein.

After selecting the load characteristic computation model and configuring the related model parameter on the load characteristic monitor corresponding to the second target CPU, the load characteristic monitor may continue to monitor the task load characteristic value of the target task executed on the second target CPU.

It may be understood that, based on the interaction process in steps 401 to 421, the load characteristic monitor 400 may continuously monitor and compute the task load characteristic value. In addition, when finding that a current task load characteristic value exceeds a corresponding threshold, the load characteristic monitor 400 may trigger an interrupt and notify the task characteristic computation module 200 to determine whether the task needs to be scheduled. When the task does not need to be scheduled, after the load characteristic monitor 400 is reset, the task continues to run on the current CPU. If the task needs to be scheduled, the performance-core and efficiency-core scheduler 300 is notified to schedule the task. In this way, real-time migration of the task on the performance core and the efficiency core is implemented, and a real-time response speed of the task is ensured. In addition, a plurality of optional load characteristic computation models may be preset on the load characteristic monitor 400 corresponding to each CPU, and the monitor invocation interface is provided to support selection and parameter configuration for the load characteristic computation model and interrupt trigger condition configuration. Therefore, the task scheduling method in this application is applicable to a plurality of scenarios.

As described above, the task scheduling method provided in embodiments of this application is not only applicable to the server 100, but also applicable to an electronic device like a mobile phone or a PC. The task scheduling method provided in embodiments of this application can ensure a real-time response speed of a task, and can further adapt to more task scheduling scenarios on various electronic devices, thereby increasing diversity of applicable scenarios.

The following describes in detail a process of computing the task load characteristic value based on the load characteristic computation model on which parameter configuration is completed in step 415.

It may be understood that there may be a plurality of preset load characteristic computation models in the system of the server 100, and a task load characteristic computation formula corresponding to one of the load characteristic computation models may be, for example, the following Formula (1):

$$\text{speedup} = W_0 + W_1 * A + W_2 * B + W_3 * C + W_4 * D + W_5 * E + W_6 * F + W_7 * G \quad (1).$$

Herein, parameters such as $w_1$ to $w_7$ represent weight coefficients of data items such as A, B, ..., and G in an "index" field in the following Table 2, and $w_0$ corresponds to a value of an MSR_PMU_PARAM register defined in Table 1. For values of parameters such as $w_0$ to $w_7$, refer to corresponding values in a "value" field in the following Table 2. For meanings of the data items represented by A, B, ..., G, and the like, refer to corresponding descriptions of a "Description" field in the following Table 2. For example, A represents "a proportion of instruction obtaining blocking caused by a load/store delay". Enumeration is not provided herein.

**Table 2**

| Weights | | Performance Counters | | |
|---|---|---|---|---|
| w_i | value | Index | Name | Description |
| 0 | 2.80431195 | / | / | / |
| 1 | -0.01309378 | A | Fetch latency bound | Proportion of instruction obtaining blocking caused by a load/store delay |
| 2 | -0.00601895 | B | Fetch bandwidth bound | Instruction obtaining blocking caused by a load/store bandwidth |

(continued)

| Weights | | Performance Counters | | |
|---|---|---|---|---|
| w_i | value | Index | Name | Description |
| 3 | -0.00662429 | C | Branch mispredicts | Proportion of detecting a branch prediction error during instruction execution |
| 4 | -0.02300369 | D | Machine clears | Proportion of a pipeline update caused by an instruction exception |
| 5 | -0.01887638 | E | Core bound | Proportion of a quantity of instructions lacking CPU resources at a pipeline backend |
| 6 | -0.01776443 | F | Memory bound | Proportion of a quantity of instructions lacking memory resources at the pipeline backend |
| 7 | -0.01715112 | G | Retiring | Proportion of a quantity of instructions that are normally executed |

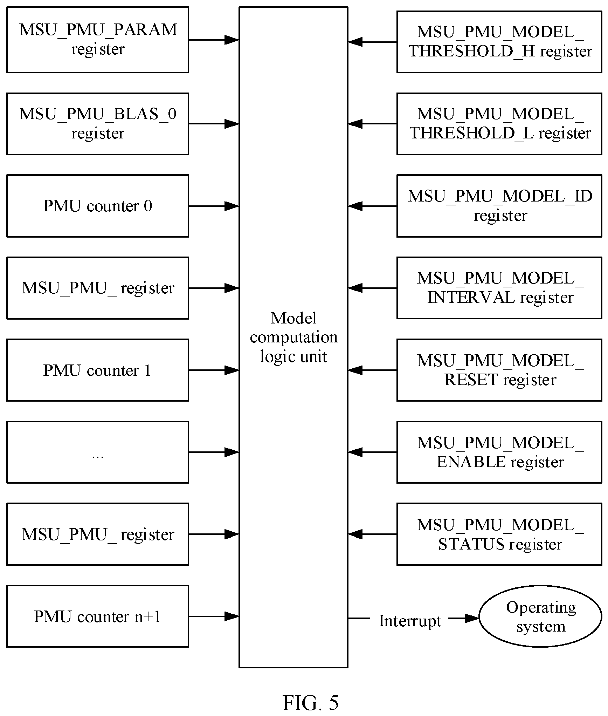

FIG. 5 is a diagram of a working principle of monitoring a task load characteristic value by a load characteristic monitor according to an embodiment of this application. The following describes, with reference to an implementation process of this application, working content of each register in a load characteristic monitor in the implementation process of this application.

As shown in FIG. 5, a load characteristic computation model based on which the load characteristic monitor computes a task load characteristic value may be determined based on a value of an MSR_PMU_MODEL_ID register corresponding to a model computing logical unit shown in FIG. 5. Correspondingly, a quantity of PMU counters based on which the model computing logical unit computes the task load characteristic value may be determined by the value of the MSR_PMU_MODEL_ID register.

For example, when a task runs on a CPU that matches the performance-core and efficiency-core scheduler 300, the load characteristic monitor 400 on the CPU may perform computation based on a load characteristic computation model selected by the task characteristic computation module 200 and the computation period that is set in the MSR_PMU_MODEL_INTERVAL register defined in Table 1. For example, the load characteristic value is computed by using the Formula (1) corresponding to the load characteristic computation model. Then, the load characteristic monitor 400 may compare a computation result with a preset load characteristic threshold corresponding to the used load characteristic computation model, for example, compare the computation result with the upper-bound threshold correspondingly set in the "MSR_PMU_MODEL_THRESHOLD_H" register in Table 1 or the lower-bound threshold correspondingly set in "MSR_PMU_MODEL_THRESHOLD_L" in Table 1.

When a result of the foregoing comparison meets an interrupt trigger condition, for example, when a load characteristic value computed by the load characteristic monitor 400 exceeds the upper-bound threshold or is lower than the lower-bound threshold, a hardware interrupt may be triggered. In this case, the load characteristic monitor 400 may send an interrupt notification to the task characteristic computation module 200 through a monitor invocation interface, and the task characteristic computation module 200 may read a task load characteristic value stored in the "MSR_PMU_MODEL_STATUS" register in Table 1, to generate a task characteristic identifier. Further, the task characteristic computation module 200 may determine, based on the generated task characteristic identifier, whether a target task needs to be scheduled.

If the task characteristic computation module 200 determines that the target task needs to be scheduled, the task characteristic computation module 200 may notify the performance-core and efficiency-core scheduler 300 to schedule the target task. In this case, the performance-core and efficiency-core scheduler 300 may match, based on the foregoing task characteristic identifier, CPUs at a proper computing power level for a current task load characteristic value of the target task, and select an idle second target CPU from the CPUs to perform task scheduling. In this process, the task characteristic computation module 200 may write the task characteristic identifier of the target task into the MSR_PMU_PARAM register corresponding to the second target CPU, and then notify the task characteristic computation module 200 to select a proper load characteristic computation model for the load characteristic monitor 400 corresponding to the second target CPU. Finally, the load characteristic monitor 400 may reset data on the load characteristic monitor 400 by setting a value of the MSR_PMU_MODEL_RESET register in Table 1, for example, may clear PMC data obtained from a historical monitoring task, so that counting data can be re-obtained and the task load characteristic value corresponding to the target task currently executed on the second target CPU can be monitored.

If the task characteristic computation module 200 determines that the target task does not need to be scheduled, the task characteristic computation module 200 resets the load characteristic computation model and resumes running of the target task. A specific scheduling process is described in the foregoing step 421. Details are not described herein.

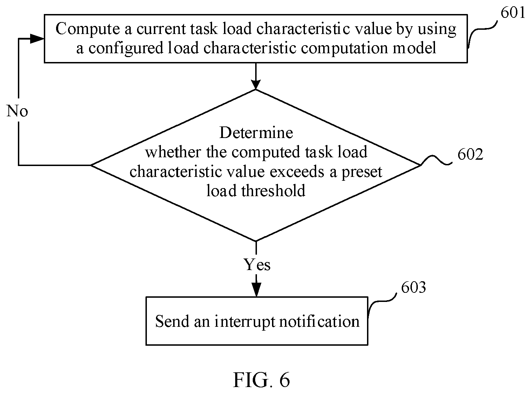

The following describes in detail, with reference to FIG. 6, a working procedure in which a load characteristic monitor triggers an interrupt.

FIG. 6 is a diagram of an implementation procedure in which a load characteristic monitor triggers an interrupt according to an embodiment of this application. It may be understood that all execution entities of steps in the procedure shown in FIG. 6 may be a load characteristic monitor 400. The execution entities of the steps are not repeatedly described in the following descriptions of the steps.

As shown in FIG. 6, the procedure includes the following steps.

601: Compute a current task load characteristic value by using a configured load characteristic computation model.

For example, the load characteristic monitor 400 may read data such as a count value of each counter, input the read data to a model computation logical unit, and perform computation based on the configured load characteristic computation model. The load characteristic computation model performs computation based on a computation period set in an MSR_PMU_MODEL_INTERVAL register. When the load characteristic monitor triggers an interrupt, the current task load characteristic value is stored in an MSR_PMU_MODEL_STATUS register.

602: Determine whether the computed task load characteristic value exceeds a preset load threshold. If a determining result is "Yes", that is, the task load characteristic value does not exceed the load threshold, the foregoing step 601 may be performed again to continue to compute a task load characteristic value at a next monitoring moment. If a determining result is "No", that is, the task load characteristic value exceeds the load characteristic threshold, the following step 603 continues to be performed to trigger an interrupt.

For example, a load threshold of a proper value may be correspondingly set for the load characteristic computation model used by the load characteristic monitor 400. The threshold may be, for example, the upper-bound threshold corresponding to the "MSR_PMU_MODEL_THRESHOLD_H" register defined in Table 1. For a specific determining process, refer to related descriptions in step 416. Details are not described herein.

603: Send an interrupt notification to a task characteristic computation module 200.

For a specific process of triggering the interrupt or initiating the interrupt, refer to related descriptions in steps 416 and 417. Details are not described herein. It may be understood that, when sending the interrupt notification, the load characteristic monitor 400 may also send a read task load characteristic value stored in the MSR_PMU_MODEL_INTERVAL register to the task characteristic computation module 200. For a specific process, refer to the related descriptions in step 416. Details are not described herein.

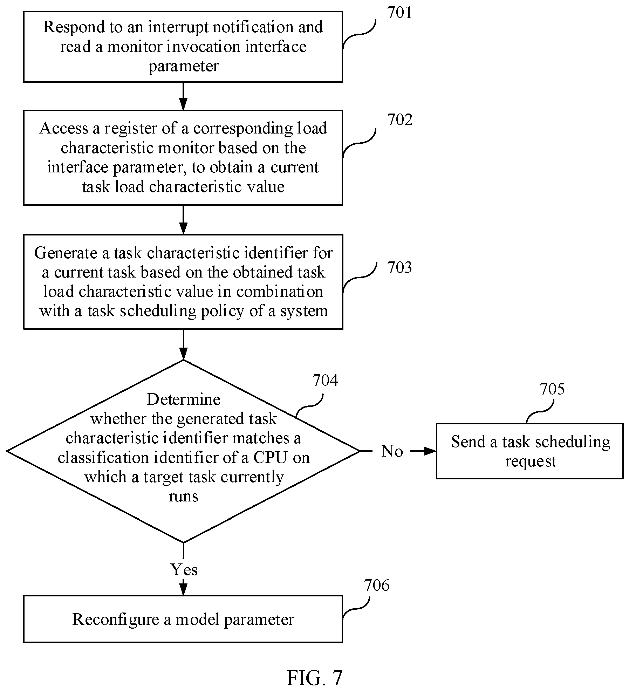

The following describes in detail, with reference to FIG. 7, a working procedure in which a task characteristic computation module initiates task scheduling in response to an interrupt.

FIG. 7 is a diagram of a working procedure in which a task characteristic computation module initiates task scheduling in response to an interrupt according to an embodiment of this application. It may be understood that all execution entities of steps in the procedure shown in FIG. 7 may be a task characteristic computation module 200. To simplify description, the execution entities of the steps are not repeatedly described when the following steps are described.

As shown in FIG. 7, the procedure includes the following steps.

701: Receive an interrupt notification.

702: Access a register of a corresponding load characteristic monitor, to obtain a current task load characteristic value.

For example, the task characteristic computation module 200 may access the register of the corresponding load characteristic monitor, and read a current task load characteristic value stored in an MSR_PMU_MODEL_STATUS register. The task load characteristic value may be a task load characteristic value computed by the load characteristic monitor based on a currently used load characteristic computation model. In some embodiments, when obtaining the current task load characteristic value, the task characteristic computation module 200 may suspend computation of the task load characteristic value by clearing a related value of an MSR_PMU_MODEL_ENABLE register.

For a specific process in which the task characteristic computation module 200 obtains the current task load characteristic value, refer to related descriptions in step 418. Details are not described herein.

703: Generate a task characteristic identifier for a current task based on the obtained task load characteristic value in combination with a task scheduling policy of a system.

For a specific process of generating the task characteristic identifier based on the task load characteristic value and the task scheduling policy, refer to related descriptions in step 403 and step 418. Details are not described herein.

704: Determine whether the generated task characteristic identifier matches a level identifier of a CPU on which a target task currently runs. If a determining result is "Yes", that is, when the generated task characteristic identifier matches the level identifier of the CPU on which the target task currently runs, the target task does not need to be scheduled, and the following step 706 may be performed, to reconfigure a model parameter. If a determining result is "No", that is, when the generated task characteristic identifier does not match the level identifier of the CPU on which the target task currently runs, the target task needs to be scheduled, and the following step 705 may continue to be performed, to send a scheduling request and the generated task characteristic identifier to a performance-core and efficiency-core scheduler. For a specific process in which the task characteristic computation module 200 determines whether the task characteristic identifier matches the CPU level identifier, refer to related descriptions in step 419. Details are not described herein.

705: Send a task scheduling request.

For example, the task characteristic computation module 200 sends the task scheduling request and the task characteristic identifier to a performance-core and efficiency-core scheduler 300 based on the determining result in step 705. For a specific process, refer to related descriptions in step 420. Details are not described herein.

706: Reconfigure a model parameter.

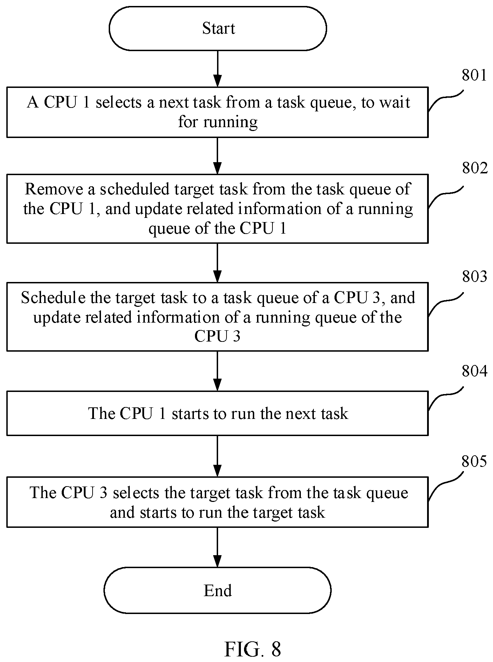

It may be understood that, after receiving the task scheduling request initiated by the task characteristic computation module, the performance-core and efficiency-core scheduler 300 selects a core based on the task characteristic identifier of the target task, a stored performance-core and efficiency-core level identifier corresponding to each CPU, and an idleness degree. After selecting a target CPU at a matched level identifier, the performance-core and efficiency-core scheduler 300 schedules the task from the current CPU to the target CPU. The following describes in detail, with reference to FIG. 8, a working procedure in which a performance-core and efficiency-core scheduler performs task scheduling.

FIG. 8 is a diagram of a working procedure in which a performance-core and efficiency-core scheduler performs task scheduling according to an embodiment of this application. It may be understood that all execution entities of steps in the procedure shown in FIG. 8 may be a performance-core and efficiency-core scheduler 300. To simplify description, the execution entities of the steps are not repeatedly described when the following steps are described.

Specifically, as shown in FIG. 8, the procedure includes the following steps.

801: A CPU 1 selects a next task from a task queue, to wait for running.

For example, the CPU 1 selects the next task from the task queue, and may mark the next task as a ready-to-run task, to wait for running. In some other embodiments, if no task in a running queue of the CPU 1 needs to run, the CPU 1 is marked as being in an idle state. This is not limited herein.

802: Remove a to-be-scheduled target task from the task queue of the CPU 1, and update related information of the running queue of the CPU 1.

For example, the to-be-scheduled target task is removed from the CPU 1, and information about an idleness degree of the CPU 1 after the task is removed from the CPU 1 is updated.

803: Schedule the target task to a task queue of a CPU 3, and update related information of a running queue of the CPU 3.

For example, the performance-core and efficiency-core scheduler 300 schedules the target task to the CPU 3, and the CPU 3 may update related information of a task queue obtained after the target task is scheduled to the task queue. For a specific scheduling process, refer to related descriptions in the foregoing steps 411 to 421. Details are not described herein.

804: The CPU 1 starts to run the next task.

For example, the CPU 1 starts to run the task selected in step 801.

805: The CPU 3 selects the target task from the task queue and starts to run the target task.

The following describes a working procedure of setting the load characteristic monitor 400 with reference to another flowchart.

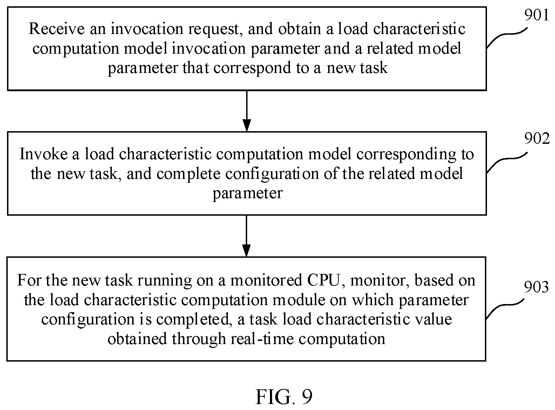

FIG. 9 is an implementation flowchart of setting a load characteristic monitor after task scheduling is performed according to an embodiment of this application. All execution entities of steps in a procedure shown in FIG. 9 may be a load characteristic monitor 400. To simplify description, the execution entities of the steps are not repeatedly described when the following steps are described.

As shown in FIG. 9, the procedure includes the following steps.

901: Receive an invocation request, and obtain a load characteristic computation model invocation parameter and a related model parameter that correspond to a new task.

For example, the invocation request is received, and the load characteristic computation model invocation parameter and the related model parameter that correspond to the new task are obtained. For a specific response process and a specific invocation process, refer to related descriptions in steps 413 and 414. Details are not described herein.

902: Invoke a load characteristic computation model corresponding to the new task, and complete configuration of the related model parameter.

For example, based on the load characteristic computation model invocation parameter and the related model parameter that correspond to the new task and that are obtained in step 901, a load characteristic computation model corresponding to the invocation parameter is determined, for invocation, from a plurality of preset load characteristic computation models, and configuration of the related model parameter is completed. For a specific model invocation procedure, refer to related descriptions in step 414. Details are not described herein.

903: For the new task running on a monitored CPU, monitor, based on the load characteristic computation module on which parameter configuration is completed, a task load characteristic value obtained through real-time computation.

For example, after the load characteristic monitor 400 performs steps 901 to 903, the load characteristic monitor 400 performs monitoring computation on the new task, and performs task load characteristic value computation on the new task based on a computation period. For a specific computation process, refer to related descriptions in step 415. Details are not described herein.

The following describes, with reference to another diagram of an implementation procedure, another implementation process of the task scheduling method provided in embodiments of this application.

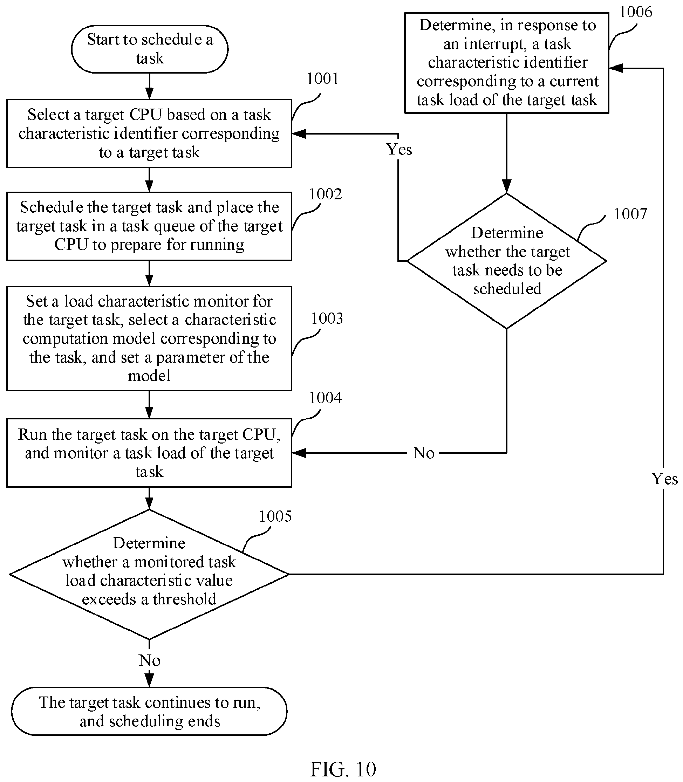

FIG. 10 is an implementation flowchart of another task scheduling method according to an embodiment of this application.

It may be understood that execution entities of steps in a procedure shown in FIG. 10 may be an electronic device like the server 100. To avoid repetition, the execution entity of each step is not described in the following specific step descriptions. In some other embodiments, execution entities of the steps shown in FIG. 10 may alternatively be the foregoing electronic device like the PC or the mobile phone. This is not limited herein.

Specifically, as shown in FIG. 10, the procedure includes the following steps.

1001: Select a target CPU based on a task characteristic identifier corresponding to a target task.

For example, level identifiers are added to CPUs in advance in a system of the server 100, and a correspondence between a task characteristic identifier and a CPU level identifier is preset, so that the target CPU whose level identifier corresponds to the task characteristic identifier may be selected based on the task characteristic identifier corresponding to the target task. For a specific correspondence and a specific matching process, respectively refer to related descriptions in steps 401 to 408. Details are not described herein.

1002: Schedule the target task and place the target task in a task queue of the target CPU to prepare for running.

For example, when running the target task, the server 100 selects, based on the task characteristic identifier, the target CPU with the corresponding level identifier, and schedules the task to the target CPU to prepare for running. For a specific process of preparing for running, refer to related descriptions in step 409. Details are not described herein.

1003: Set a load characteristic monitor for the target task, select a characteristic computation model corresponding to the task, and set a parameter of the model.

For example, the server 100 invokes a corresponding monitor invocation interface based on the selected target CPU, selects, based on the task characteristic identifier, the characteristic computation model corresponding to the task, and sets the parameter of the model.

It may be understood that the load characteristic computation model may be selected based on a running scenario and a task characteristic identifier of a corresponding task. For different tasks executed on different electronic devices, correspondingly selected load characteristic computation models may be different. This is not limited herein. For a specific process of selecting the load characteristic computation model and setting the parameter of the model, refer to the foregoing steps 401 to 414. Details are not described herein.

1004: Run the target task on the target CPU, and monitor a task load of the target task.

For example, after performing the foregoing steps 1001 to 1003, the server 100 may enable the target task to start to run on the target CPU, and monitor the task load of the target task in real time. For a specific process of running the target task and monitoring the task load of the target task, refer to related descriptions in steps 411 to 415. Details are not described herein.

1005: Determine whether a monitored task load characteristic value exceeds a threshold. If a determining result is "Yes", it indicates that the target task may need to be scheduled, and the following step 1006 is performed to determine a current task characteristic identifier of the target task. If a determining result is "No", it indicates that the target task does not need to be scheduled, and the target task may continue to run on the target CPU.

For example, a load characteristic monitor 400 that is in the server 100 and that is set corresponding to the target task may compute and monitor, based on the load characteristic computation model that is set corresponding to the target task, the task load characteristic value based on the computation period that is set corresponding to the target task and that is in the MSR_PMU_MODEL_INTERVAL register defined in Table 1. When the computed task load characteristic value exceeds a corresponding threshold, an interrupt may be triggered, and the following step 1006 continues to be performed. If the task load characteristic value does not exceed the corresponding threshold, the target task may continue to run on the target CPU. The foregoing corresponding threshold may be, for example, the upper-bound threshold corresponding to the "MSR_PMU_MODEL_THRESHOLD_H" register defined in Table 1, or may be the lower-bound threshold corresponding to the "MSR_PMU_MODEL_THRESHOLD_L" register defined in Table 1.

For a specific determining process performed in step 1005, refer to related descriptions in step 416. Details are not described herein.

1006: Determine, in response to the interrupt, a task characteristic identifier corresponding to a current task load of the target task.

For example, in step 1005, the server 100 determines that the task load characteristic value exceeds the corresponding threshold, and triggers the interrupt. Further, in response to the triggered interrupt, the server 100 may generate, according to a preset rule for generating a task characteristic identifier, the task characteristic identifier based on the monitored task load characteristic value.

It may be understood that the rule may be generating a corresponding task characteristic identifier based on a range to which the task load characteristic value belongs, or may be generating a corresponding task characteristic identifier based on the task load characteristic value and a task scheduling policy provided by the application scheduling policy service of the system. This is not limited herein. For a specific process of responding to the interrupt and generating the current task characteristic identifier of the target task, refer to related descriptions in steps 417 and 418. Details are not described herein.

1007: Determine whether the target task needs to be scheduled. If a determining result is "Yes", the task needs to be scheduled, and step 1001 needs to be performed again to select a proper target CPU for the task. If a determining result is "No", the task does not need to be scheduled, and a reason for which the task does not need to be scheduled may be further determined.

For example, the server 100 may determine, based on the task characteristic identifier that corresponds to the current task load of the target task and that is determined in step 1006, whether the task needs to be scheduled. For example, if the server 100 determines, based on the task characteristic identifier, that a level identifier corresponding to the target CPU on which the target task currently runs does not match the current task characteristic identifier of the target task, the server 100 may determine that the target task needs to be scheduled. In this case, the server 100 may reselect, for the target task, a target CPU with a matched level identifier, and schedule the target task to the newly selected target CPU for continuous running. The server 100 continues to perform the foregoing steps 1000 to 1004. After setting a load characteristic monitor for the target CPU that runs the target task, the server 100 enables the target task to continue to run on the newly selected target CPU.

For a specific process of scheduling the task, refer to related descriptions in step 421. Details are not described herein.

If it is determined that the task does not need to be scheduled, a reason for which the task does not need to be scheduled may be further determined. The server 100 resets, based on the found reason by running the task characteristic computation module 200, the load characteristic computation model selected from the load characteristic monitor 400, and the task continues to run on the current CPU. For a specific reason for which the task is not scheduled, refer to related descriptions in step 419. Details are not described herein.

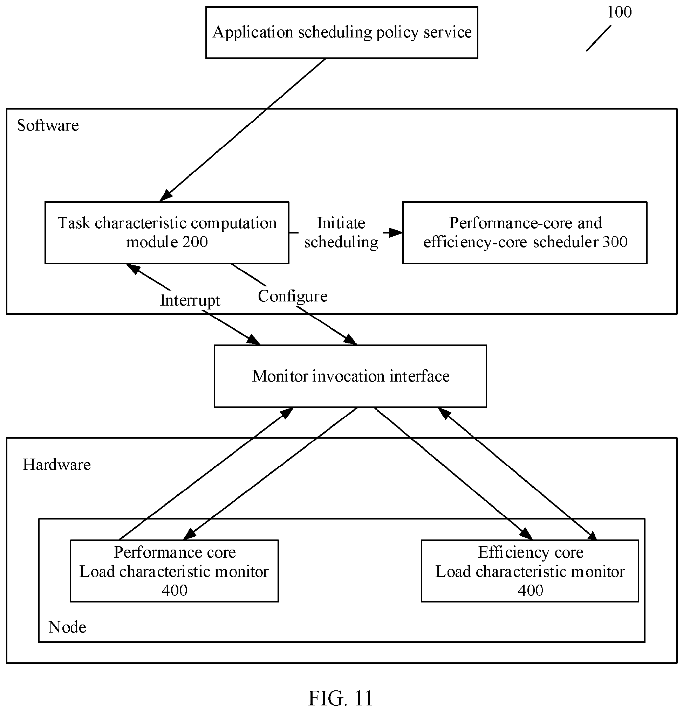

A process of interaction between structures of the system shown in FIG. 4A to FIG. 4D may alternatively be summarized as an internal implementation process shown in FIG. 11.

FIG. 11 is a diagram of an internal implementation process of a task scheduling method according to an embodiment of this application.

As shown in FIG. 11, in an operating system of a server 100 that implements the task scheduling method in this application, after triggering an interrupt, the load characteristic monitor 400 may send an interrupt notification to a task characteristic computation module 200, that is, "interrupt" in FIG. 11. Further, after receiving the interrupt notification, the task characteristic computation module 200 responds to the interrupt, reads interrupt information, generates a task characteristic identifier based on a task load characteristic value in the interrupt information, and further determines whether a task needs to be scheduled.

Still refer to FIG. 11. When determining that the task needs to be scheduled, the task characteristic computation module 200 initiates a scheduling request to a performance-core and efficiency-core scheduler 300, that is, "initiate scheduling" in FIG. 11. The performance-core and efficiency-core scheduler 300 selects, based on the received scheduling request and task information, a CPU whose level identifier corresponds to the task characteristic identifier, to perform task scheduling.

Still refer to FIG. 11. When determining that the task does not need to be scheduled, the task characteristic computation module 200 may further determine a reason for which the task does not need to be scheduled. Further, based on the found reason, the task characteristic computation module 200 resets the load characteristic computation model of the load characteristic monitor 400 through a monitor invocation interface, and the task continues to run. For a specific reason for which the task is not scheduled, refer to related descriptions in step 419. Details are not described herein.

Still refer to FIG. 11. A task scheduling policy configured by an application scheduling policy service is mainly used. The user may configure the task scheduling policy by using the application scheduling policy service. In a task running process, the task characteristic computation module 200 may change a working status of a load characteristic monitor based on a change of the task scheduling policy. For example, as described in step 419, in some other embodiments, according to the task scheduling policy set by the application scheduling policy service, the load characteristic monitor 400 needs to monitor the task load characteristic value at the beginning, and after periodic monitoring, the application scheduling policy service indicates to disable monitoring on the task load characteristic value. In this case, a corresponding measure needs to be taken in a timely manner based on the change of the task scheduling policy, to disable monitoring performed by the load characteristic monitor 400 on the task.

In another embodiment, for example, the user specifies, by using the task scheduling policy configured by the application scheduling policy service, that a task is a performance-core task. The task characteristic computation module 200 synchronizes, to the performance-core and efficiency-core scheduler 300 and the load characteristic monitor 400, a task scheduling mark generated by the task scheduling policy for the task, and the task runs on a performance core based on the configured task scheduling policy.

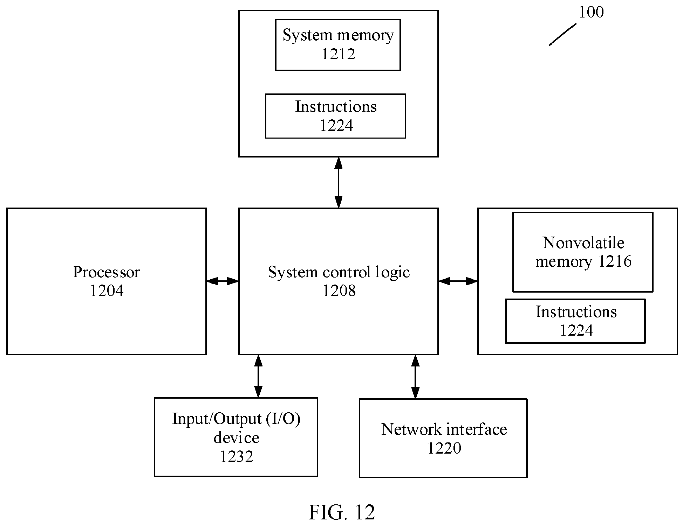

FIG. 12 is a diagram of a hardware structure of a server 100 according to an embodiment of this application.

As shown in FIG. 12, the server 100 may include one or more processors 1204, system control logic 1208 connected to at least one processor 1204, a system memory 1212 connected to the system control logic 1208, a nonvolatile memory (NVM) 1216 connected to the system control logic 1208, and a network interface 1220 connected to the system control logic 1208.

In some embodiments, the processor 1204 may include one or more single-core or multi-core processors. In some embodiments, the processor 1204 may include any combination of a general-purpose processor and a dedicated processor (for example, a graphics processing unit, an application processor, or a baseband processor). In an embodiment in which a system 1200 uses an eNB (Evolved NodeB, enhanced base station) 101 or a RAN (Radio Access Network, radio access network) controller 102, the processor 1204 may be configured to execute various compliant embodiments.

In some embodiments, the system control logic 1208 may include any proper interface controller, to provide any proper interface for at least one processor 1204 and/or any proper device or component that communicates with the system control logic 1208.

In some embodiments, the system control logic 1208 may include one or more memory controllers, to provide an interface connected to the system memory 1212. The system memory 1212 may be configured to: load and store data and/or instructions. In some embodiments, the memory 1212 of the system 1200 may include any proper volatile memory like a proper dynamic random access memory (DRAM).

The NVM/memory 1216 may include one or more tangible non-transitory computer-readable media that are configured to store data and/or instructions. In some embodiments, the NVM/memory 1216 may include any proper nonvolatile memory like a flash memory and/or any proper nonvolatile storage device like at least one of the following: an HDD (Hard Disk Drive, hard disk drive), a CD (Compact Disc, compact disc) drive, and a DVD (Digital Versatile Disc, digital versatile disc) drive.

The NVM/memory 1216 may include some of storage resources on an apparatus in which the system 1200 is installed, or may be accessed by a device, but not necessarily a part of the device. For example, the NVM/memory 1216 may be accessed over a network through the network interface 1220.

In particular, the system memory 1212 and the NVM/memory 1216 each may include a temporary copy and a permanent copy of instructions 1224. The instructions 1224 may include instructions that, when executed by at least one processor 1204, enable the system 1200 to implement the method shown in FIG. 4A to FIG. 4D or FIG. 10. In some embodiments, the instructions 1224, hardware, firmware, and/or software components thereof may additionally/alternatively be deployed in the system control logic 1208, the network interface 1220, and/or the processor 1204.

The network interface 1220 may include a transceiver, and is configured to provide a radio interface for the system 1200 to communicate with any other proper device (like a front-end module, and an antenna) through one or more networks. In some embodiments, the network interface 1220 may be integrated with another component of the system 1200. For example, the network interface 1220 may be integrated with at least one of at least one processor 1204, the system memory 1212, the NVM/memory 1216, and a firmware device (not shown) having instructions. When the at least one processor 1204 executes the instructions, the system 1200 implements the method shown in FIG. 4A to FIG. 4D.

The network interface 1220 may further include any proper hardware and/or firmware to provide a multiple-input multiple-output radio interface. For example, the network interface 1220 may be a network adapter, a wireless network adapter, a phone modem, and/or a wireless modem.

In an embodiment, at least one processor 1204 may be packaged together with logic of one or more controllers used for the system control logic 1208, to form a system in package (SiP). In an embodiment, at least one processor 1204 may be integrated on a same tube core with logic of one or more controllers used for the system control logic 1208, to form a system on a chip (SoC).

The system 1200 may further include an input/output (I/O) device 1232. The I/O device 1232 may include a user interface through which a user can interact with the system 1200. A peripheral component interface is designed so that a peripheral component can also interact with the system 1200. In some embodiments, the system 1200 further includes a sensor, configured to determine at least one of an environmental condition and location information that are associated with the system 1200.

In some embodiments, the user interface may include but is not limited to a display (for example, a liquid crystal display or a touchscreen display), a speaker, a microphone, one or more cameras (for example, a still image camera and/or a video camera), a flashlight (for example, a light-emitting diode flashlight), and a keyboard.

In some embodiments, the peripheral component interface may include but is not limited to a nonvolatile memory port, an audio jack, and a charging port.

In some embodiments, the sensor may include but is not limited to a gyroscope sensor, an accelerometer, a proximity sensor, an ambient light sensor, and a positioning unit. The positioning unit may alternatively be a part of the network interface 1220, or may interact with the network interface 1220, to communicate with a component (for example, a global positioning system (GPS) satellite) of a positioning network.

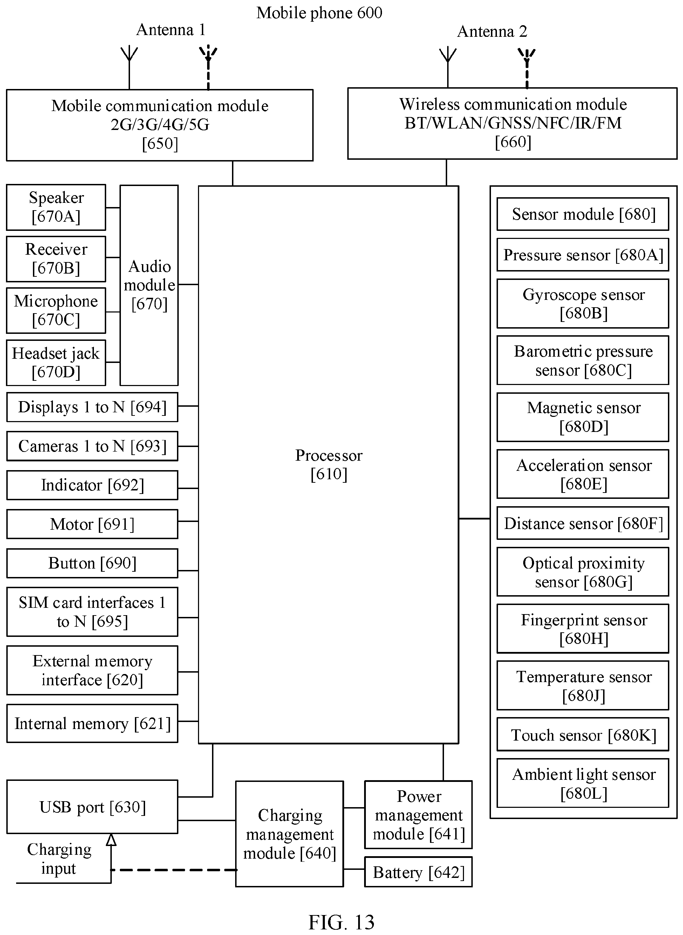

FIG. 13 is a diagram of a hardware structure of a mobile phone 600 according to an embodiment of this application.

The mobile phone 600 may include a processor 610, an external memory interface 620, an internal memory 621, a universal serial bus (universal serial bus, USB) port 630, a charging management module 620, a power management module 621, a battery 622, an antenna 1, an antenna 2, a mobile communication module 650, a wireless communication module 660, an audio module 670, a speaker 670A, a receiver 670B, a microphone 670C, a headset jack 670D, a sensor module 680, a button 610, a motor 691, an indicator 692, a camera 693, a display 694, a subscriber identification module (subscriber identification module, SIM) card interface 695, and the like. The sensor module 680 may include a pressure sensor 680A, a gyroscope sensor 680B, a barometric pressure sensor 680C, a magnetic sensor 680D, an acceleration sensor 680E, a distance sensor 680F, an optical proximity sensor 680G, a fingerprint sensor 680H, a temperature sensor 680J, a touch sensor 680K, an ambient light sensor 680L, and the like.

It may be understood that the structure illustrated in this embodiment of the present invention does not constitute a specific limitation on the mobile phone 600. In some other embodiments of this application, the mobile phone 600 may include more or fewer components than those shown in the figure, or combine some components, or split some components, or have different component arrangements. The components shown in the figure may be implemented by hardware, software, or a combination of software and hardware.

The processor 610 may include one or more processing units. For example, the processor 610 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on instruction operation code and a time sequence signal, to complete control of instruction fetching and instruction execution.

A memory may be further disposed in the processor 610, and is configured to store instructions and data. In some embodiments, the memory in the processor 610 is a cache memory. The memory may store instructions or data just used or cyclically used by the processor 610. If the processor 610 needs to use the instructions or the data again, the processor 610 may directly invoke the instructions or the data from the memory. This avoids repeated access and reduces waiting time of the processor 610, thereby improving system efficiency.

In this embodiment of this application, the processor 610 may obtain data and instructions that are in the memory and that are used to perform the task scheduling method provided in embodiments of this application, to implement a task scheduling solution provided in embodiments of this application. For a specific implementation process, refer to those shown in FIG. 4A to FIG. 4D to FIG. 10 and related descriptions. Details are not described herein.

In some embodiments, the processor 610 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB port 630 is a port that conforms to a USB standard specification, and may be specifically a mini USB port, a micro USB port, a USB type-C port, or the like. The USB port 130 may be configured to connect to a charger to charge the mobile phone 600, or may be configured to transmit data between the mobile phone 600 and a peripheral device, or may be configured to connect to a headset for playing an audio through the headset. The interface may be further configured to connect to another electronic device like an AR device.

It may be understood that an interface connection relationship between modules illustrated in this embodiment of the present invention is merely an example for description, and does not constitute a limitation on a structure of the mobile phone 600. In some other embodiments of this application, the mobile phone 600 may alternatively use an interface connection manner different from that in the foregoing embodiment, or a combination of a plurality of interface connection manners.

The charging management module 620 is configured to receive a charge input from the charger. The power management module 621 is configured to connect to the battery 622, the charging management module 620, and the processor 610. The power management module 621 receives an input of the battery 622 and/or the charging management module 620, and supplies power to the processor 610, the internal memory 621, the display 694, the camera 693, the wireless communication module 660, and the like.

A wireless communication function of the mobile phone 600 may be implemented by using the antenna 1, the antenna 2, the mobile communication module 650, the wireless communication module 160, the modem processor, the baseband processor, and the like.

The antenna 1 and the antenna 2 are configured to transmit and receive an electromagnetic wave signal. Each antenna in the mobile phone 600 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 650 may provide a solution to wireless communication that includes 2G/3G/4G/5G or the like and that is applied to the mobile phone 600. The wireless communication module 660 may provide a solution to wireless communication that is applied to the mobile phone 600 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the mobile phone 600, the antenna 1 and the mobile communication module 650 are coupled, and the antenna 2 and the wireless communication module 660 are coupled, so that the mobile phone 600 can communicate with a network and another device by using a wireless communication technology.

The mobile phone 600 implements a display function by using the GPU, the display 694, the application processor, and the like. The GPU is a microprocessor for image processing, and is connected to the display 694 and the application processor. The GPU is configured to: perform mathematical and geometric computation, and render an image. The processor 610 may include one or more GPUs that execute program instructions to generate or change display information.

The display 694 is configured to display an image, a video, and the like.

The mobile phone 600 may implement a photographing function by using the ISP, the camera 693, the video codec, the GPU, the display 694, the application processor, and the like. The ISP is configured to process data fed back by the camera 693. The camera 693 is configured to capture a static image or a video.

The external memory interface 620 may be configured to connect to an external storage card, for example, a micro SD card, to extend a storage capability of the mobile phone 600. The external storage card communicates with the processor 610 through the external memory interface 620, to implement a data storage function. For example, files such as music and videos are stored in the external storage card.

The internal memory 621 may be configured to store computer executable program code, where the executable program code includes instructions. The internal memory 621 may include a program storage area and a data storage area. The program storage area may store an operating system, an application required by at least one function (for example, a voice playing function or an image playing function), and the like. The data storage area may store data (such as audio data and a phone book) and the like created during use of the mobile phone 600. In addition, the internal memory 621 may include a high-speed random access memory, or may include a nonvolatile memory, for example, at least one magnetic disk storage device, a flash memory, or a universal flash storage (universal flash storage, UFS). The processor 610 executes various functional applications of the mobile phone 600 and data processing of the mobile phone 600 by running the instructions stored in the internal memory 621 and/or instructions stored in the memory that is disposed in the processor.

The mobile phone 600 may implement an audio function, for example, music playing and recording, by using the audio module 670, the speaker 670A, the receiver 670B, the microphone 670C, the headset port 670D, the application processor, and the like.

The audio module 670 is configured to convert digital audio information into an analog audio signal for output, and is further configured to convert an analog audio input into a digital audio signal. The audio module 670 may be further configured to: encode and decode an audio signal. In some embodiments, the audio module 670 may be disposed in the processor 610, or some functional modules of the audio module 670 are disposed in the processor 610.

The receiver 670B, also referred to as an "earpiece", is configured to convert an audio electrical signal into a sound signal. When a call is answered or voice information is listened to by using the mobile phone 600, the receiver 670B may be put close to a human ear to listen to a voice.

The microphone 670C, also referred to as a "mike" or a "microphone", is configured to convert a sound signal into an electrical signal. When making a call or sending voice information, a user may place the mouth of the user near the microphone 670C to make a sound, to input a sound signal to the microphone 670C. At least one microphone 670C may be disposed in the mobile phone 600. In some other embodiments, two microphones 670C may be disposed in the mobile phone 600, to collect a sound signal and further implement a noise reduction function. In some other embodiments, three, four, or more microphones 670C may alternatively be disposed in the mobile phone 600, to collect a sound signal, reduce noise, further identify a sound source, implement a directional recording function, and the like.

The headset jack 670D is configured to connect to a wired headset. The headset jack 670D may be a USB port 630, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 680A is configured to sense a pressure signal, and may convert the pressure signal into an electrical signal.

The fingerprint sensor 680H is configured to collect a fingerprint. The mobile phone 600 may use a feature of the collected fingerprint to implement fingerprint-based unlocking, application lock access, fingerprint-based photographing, fingerprint-based call answering, and the like.

The touch sensor 680K is also referred to as a "touch component". The touch sensor 680K may be disposed on the display 694. The touch sensor 680K and the display 694 form a touchscreen, and the touchscreen is also referred to as a "touch control screen". The touch sensor 680K is configured to detect a touch operation performed on or near the touch sensor 680K. The touch sensor may transfer the detected touch operation to the application processor, to determine a type of a touch event. A visual output related to the touch operation may be provided through the display 694. In some other embodiments, the touch sensor 680K may alternatively be disposed on a surface of the mobile phone 600, and is located on a position different from that of the display 694. In this application, when the application scheduling policy service configures a task scheduling policy, the user enters the task scheduling policy on the mobile phone 600. The touch sensor may transfer a detected user touch operation to the application processor, to determine a type of a touch event. The input task scheduling policy is recorded in the task characteristic computation module 200 in this application.

The button 610 includes a power button, a volume button, and the like. The button 610 may be a mechanical button, or may be a touch button. The mobile phone 600 may receive a button input, and generate a button signal input related to user setting and function control of the mobile phone 600.

The motor 691 may generate a vibration prompt. The motor 691 may be configured to provide an incoming call vibration prompt or a touch vibration feedback. For example, touch operations performed on different applications (for example, photographing and audio playback) may correspond to different vibration feedback effects. The motor 691 may also correspond to different vibration feedback effects for touch operations performed on different areas of the display 694. Different application scenarios (for example, a time reminder, information receiving, an alarm clock, and a game) may also correspond to different vibration feedback effects. A touch vibration feedback effect may be further customized.

The indicator 692 may be an indicator light, and may be configured to indicate a charging status and a power change, or may be configured to indicate a message, a missed call, a notification, and the like.

The SIM card interface 695 is configured to connect to a SIM card. The SIM card may be inserted into the SIM card interface 695 or removed from the SIM card interface 695, to implement contact with and separation from the mobile phone 600. The mobile phone 600 may support one or N SIM card interfaces, where N is a positive integer greater than 1. The SIM card interface 695 may support a nano-SIM card, a micro-SIM card, a SIM card, and the like. A plurality of cards may be simultaneously inserted into a same SIM card interface 695. The plurality of cards may be of a same type or of different types. The SIM card interface 695 may also be compatible with different types of SIM cards. The SIM card interface 695 may also be compatible with an external storage card. The mobile phone 600 interacts with a network through a SIM card, to implement functions such as calling and data communication. In some embodiments, the mobile phone 600 uses an eSIM, namely, an embedded SIM card. The eSIM card may be embedded in the mobile phone 600, and cannot be separated from the mobile phone 600.

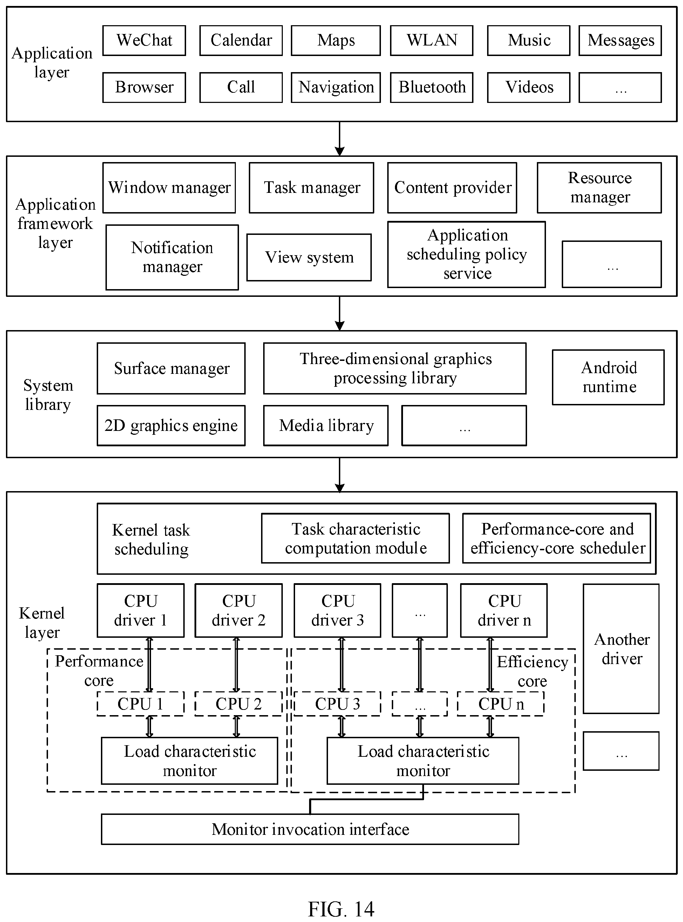

FIG. 14 is a diagram of a system architecture of a mobile phone 600 according to an embodiment of this application.

A software system of the mobile phone 600 may use a layered architecture, an event-driven architecture, a microkernel architecture, a microservice architecture, or a cloud architecture. In this embodiment of the present invention, an Android system with a layered architecture is used as an example to describe a software structure of the mobile phone 600.

It may be understood that, in a layered architecture, software is divided into several layers, and each layer has a clear role and a clear task. The layers communicate with each other through a software interface. In some embodiments, the Android system is divided into four layers: an application layer, an application framework layer, an Android runtime (Android runtime) and system library, and a kernel layer from top to bottom.

As shown in FIG. 14, the application layer may include a series of application packages. For example, the application packages may include applications such as WeChat™, Browser, Videos, Calendar, Call, Maps, Navigation, WLAN, Bluetooth, Music, and Messages.

The application framework layer provides an application programming interface (application programming interface, API) and a programming framework for an application at the application layer. The application framework layer includes some predefined functions. For example, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, a phone book, and the like.

The view system includes a visual control, for example, a control for displaying a text or a control for displaying a picture. The view system may be configured to construct an application. A display interface may include one or more views. For example, a display interface including a message notification icon may include a view for displaying a text and a view for displaying a picture.

The phone manager is configured to provide a communication function of the mobile phone 600, for example, call status management (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to: notify download completion, provide a message reminder, and the like. The notification manager may alternatively be a notification that appears in a top status bar of the system in a form of a graph or a scroll bar text, for example, a notification of an application running on the background, or may be a notification that appears on a screen in a form of a dialog window. For example, text information is displayed in the status bar, an announcement is given, the electronic device vibrates, or the indicator light blinks.

In this embodiment of this application, the application framework layer may further include an application scheduling policy service, configured to preset, based on a system running requirement, a scheduling condition for a task of each application running in the system. For example, to ensure quick response from some system applications, the system may limit, by using the application scheduling policy service, that each task of the system application runs only on an efficiency core. Correspondingly, the task characteristic computation module may combine the foregoing task scheduling policies preset by the application scheduling policy service, and no longer schedule a corresponding task to a performance core for running.

The Android runtime includes a kernel library and a virtual machine. The Android runtime is responsible for scheduling and management of the Android system.

The kernel library includes two parts: a functional function to be invoked in Java language and a kernel library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least various hardware drivers, for example, a CPU driver, and a display driver, a camera driver, an audio driver, and a sensor driver that are not shown in FIG. 14.

In this embodiment of this application, the kernel layer further includes a task characteristic computation module, a performance-core and efficiency-core scheduler, a load characteristic monitor, a monitor invocation interface, and the like. For specific functions performed by the task characteristic computation module, the performance-core and efficiency-core scheduler, the load characteristic monitor, and the monitor invocation interface in a process of implementing the task scheduling method provided in embodiments of this application, refer to related descriptions in FIG. 3 and FIG. 4A to FIG. 4D. Details are not described herein.

It may be understood that electronic devices to which the task scheduling method and apparatus provided in embodiments of this application are applicable may include but are not limited to a mobile phone, a tablet computer, a desktop computer, a laptop computer, a handheld computer, a netbook, an augmented reality (augmented reality, AR) device/a virtual reality (virtual reality, VR) device, a smart television, a wearable device like a smart watch, a server, a mobile email device, an in-vehicle infotainment device, a portable game console, a portable music player, a reader device, a television set in which one or more processors are embedded or coupled, or another electronic device that can access a network.

In this specification, a reference to "an embodiment" or "embodiments" means that a specific characteristic, structure, or feature described with reference to the embodiment is included in at least one example implementation solution or technology according to this application disclosure. The phrase "in one embodiment" appearing in various places in the specification does not necessarily all mean a same embodiment.

This application disclosure also relates to an apparatus for performing operations in the text. The apparatus may be specially constructed for a required purpose or may include a general-purpose computer that is selectively activated or reconfigured by a computer program stored in a computer. Such a computer program may be stored on a computer-readable medium, for example, but not limited to, any type of disk, including a floppy disk, an optical disc, a CD-ROM, a magnetic optical disk, a read only memory (ROM), a random access memory (RAM), an EPROM, an EEPROM, a magnetic or optical card, an application-specific integrated circuit (ASIC), and any type of medium suitable for storing electronic instructions. In addition, each may be coupled to a computer system bus. Moreover, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, this application disclosure is intended to describe, but not limit, the scope of the concepts discussed herein.

## Claims

1. A task scheduling method, applied to an electronic device, wherein the method comprises:

   computing a first load value required for executing a first task, and determining at least one first-level processor corresponding to a first load range to which the first load value belongs;
   processing the first task by using a first-level processor in an idle state in the at least one first-level processor;
   computing a second load value required for executing a second task, and determining at least one second-level processor corresponding to a second load range to which the second load value belongs; and
   processing the second task by using a second-level processor in an idle state in the at least one second-level processor.

2. The method according to claim 1, wherein in a process of processing the first task by using the first-level processor, the method further comprises:

   computing a third load value required for executing the first task, and determining at least one third-level processor corresponding to a third load range to which the third load value belongs; and
   processing the first task by using a third-level processor in an idle state in the at least one third-level processor, wherein
   the third-level processor and the first-level processor are processors at different levels, and the third-level processor and the second-level processor are processors at a same level or different levels.

3. The method according to claim 2, wherein the processing the first task by using a third-level processor in an idle state in the at least one third-level processor comprises:

   triggering an interrupt for the process of processing the first task by using the first-level processor;
   removing the first task from a first task queue of the first-level processor, and adding the first task to a second task queue of the third-level processor; and
   selecting, by using the third-level processor, the first task in the second task queue to proceed processing of the first task.

4. The method according to claim 3, wherein the electronic device comprises a preset first performance threshold and a preset second performance threshold that correspond to the first level processor, wherein the first performance threshold is greater than the second performance threshold; and
   the triggering an interrupt for the process of processing the first task by using the first-level processor comprises:
   when detecting that the computed third load value is greater than the first performance threshold or less than the second performance threshold, triggering the interrupt for the process of processing the first task by using the first-level processor.

5. The method according to claim 2, wherein the electronic device comprises a correspondence between a task characteristic identifier and a processor level identifier, and the processor level identifier comprises at least the first-level processor and the second-level processor; and
the determining at least one first-level processor corresponding to a first load range to which the first load value belongs comprises:

converting, based on a preset identifier conversion rule, the computed first load value into a first identifier value corresponding to the task characteristic identifier; and
determining that the first identifier value belongs to an identifier value range corresponding to a first task characteristic identifier, and determining the at least one first-level processor based on a first correspondence between the first task characteristic identifier and the first-level processor.

6. The method according to claim 5, wherein the electronic device comprises a second correspondence between the first load range and an identifier value range corresponding to the first task characteristic identifier; and
the determining at least one first-level processor corresponding to a first load range to which the first load value belongs comprises:

determining the first load range to which the first load value belongs, and determining, based on the second correspondence, the first task characteristic identifier corresponding to the first load value; and
determining the at least one first-level processor based on the first correspondence.

7. The method according to claim 5, wherein the electronic device comprises a plurality of processors; and

the electronic device adds the processor level identifier to each processor based on a computing power characteristic value of each processor, wherein
the computing power characteristic value of each processor is related to a frequency and microarchitecture computing power of each processor, and the frequency of the processor comprises a dominant frequency or an operating frequency of the processor.

8. The method according to any one of claims 1 to 7, wherein the first load value is related to a type of an instruction that is related to the first task and that is obtained and executed by the first-level processor and a statistical result of execution of the instruction; and
the second load value is related to a type of an instruction that is related to the first task and that is obtained and executed by the second-level processor and a statistical result of execution of the instruction.

9. An electronic device, comprising one or more processors and one or more memories, wherein the one or more memories store one or more programs, and when the one or more programs are executed by the one or more processors, the electronic device is enabled to perform the task scheduling method according to any one of claims 1 to 8.

10. A computer-readable storage medium, wherein the storage medium stores instructions, and when the instructions are executed on a computer, the computer is enabled to perform the task scheduling method according to any one of claims 1 to 8.

FIG. 1

```
                                          ┌─────────────────────┐
                                          │    OS scheduler     │
                                          └─────────────────────┘
                                                     │
┌──────────────┐                                    │ Read
│     CPU      │                                    ▼
│   hardware   │
│  information │
│   feedback   │
└──────────────┘
      │
      │ Read
      ▼
┌──────────────┐      Update
│    Table     │──────────▶
│   manager    │
└──────────────┘
      │
      │ Update
      ▼
```

| Thread 0 Performance data Large IPC Small IPC | Thread 1 Performance data Large IPC Small IPC | Thread n Performance data Large IPC Small IPC |
|---|---|---|

| Type 0 CPU performance ranking table CPU 00 CPU 01 CPU 02 | Type 1 CPU performance ranking table CPU 10 CPU 11 CPU 12 |
|---|---|

FIG. 2a

┌──────────────────┐
│   Application    │
│    framework     │
└──────────────────┘
         │
┌──────────────────┐
│ Target time point │
└──────────────────┘

| Task scheduler | Scheduling delay | Task computing power requirement computation module | I/O rate | I/O drive cable |
|---|---|---|---|---|
|  | CPU utilization |  |  |  |

Computing power requirement

Response to scheduling ──── Linear grouping

OS kernel

FIG. 2b

Application service layer

| Web crawler | Application-layer search engine | Data analysis service |
| Application scheduling policy service | | ... |

System service and application framework layer

| MySQL database | Big data processing engine | Math library (math library) | ... |

Kernel task scheduling | Task characteristic computation module | Performance-core and efficiency-core scheduler

Kernel layer

| CPU driver 1 | CPU driver 2 | CPU driver 3 | ... | CPU driver n | Another driver |

Performance core

Efficiency core

| CPU 1 | CPU 2 | CPU 3 | ... | CPU n | ... |

Load characteristic monitor

Load characteristic monitor

Monitor invocation interface

FIG. 3

| Task characteristic computation module 200 | Performance-core and efficiency-core scheduler 300 | Load characteristic monitor 400 |
|---|---|---|

401: The performance-core and efficiency-core scheduler 300 obtains hardware configuration information of each CPU, computes and determines a computing power level corresponding to each CPU, and adds a level identifier

402: Send a computing power level classification result of the CPU

403: Set, based on the received computing power level classification result, a correspondence between a task characteristic identifier and a CPU level identifier and a rule for generating a task characteristic identifier

Correspondence synchronization

404: Obtain a target task and an initial task load characteristic value of the task

405: Send the task load characteristic value of the target task

406: Receive the task load characteristic value, and generate, based on the rule for generating the task characteristic identifier, a task characteristic identifier corresponding to the target task

TO FIG. 4B

TO FIG. 4B

TO FIG. 4B

FIG. 4A

CONT.
FROM
FIG. 4A

CONT.
FROM
FIG. 4A

CONT.
FROM
FIG. 4A

407: Send the task characteristic identifier

408: Select, based on the received task characteristic identifier, a first target CPU at a corresponding computing power level

409: Schedule the target task to a running queue of the first target CPU, to wait for running

410: Send identification information of the first target CPU that runs the target task

411: Configure a load characteristic monitor 400 for the CPU based on the identification information of the first target CPU through a monitor invocation interface

412: Match a corresponding load characteristic computation model for the target task running on the first target CPU, and set a related model parameter

413: Send a matched load characteristic computation model invocation parameter and the related model parameter

Notify to run the target task on the first target CPU

TO
FIG. 4C

TO
FIG. 4C

TO
FIG. 4C

FIG. 4B

CONT.
FROM
FIG. 4B

CONT.
FROM
FIG. 4B

CONT.
FROM
FIG. 4B

414: Invoke a corresponding load
characteristic computation model
based on the received invocation
parameter and the related model
parameter, and complete
configuration of the related model
parameter

415: Monitor a task load
characteristic value in a running
process of the target task

416:
Determine
whether a real-time task
load characteristic value
exceeds a load
characteristic
threshold

No

Yes

417: Send an interrupt notification and a
current task load characteristic value of the
target task

418: Respond to the interrupt,
obtain the current task load
characteristic value of the target
task, and generate a corresponding
task characteristic identifier

Yes

TO
FIG. 4D

TO
FIG. 4D

TO
FIG. 4D

FIG. 4C

CONT.
FROM
FIG. 4C

CONT.
FROM
FIG. 4C

CONT.
FROM
FIG. 4C

419:
Determine,
based on the generated
task characteristic identifier,
whether a level identifier
corresponding to the first target
CPU on which the target task
is currently executed
matches the task
characteristic
identifier

No

420: Send the
scheduling request
for the target task
and the generated
task characteristic
identifier

421: In response to the scheduling request,
select, based on the received task
characteristic identifier, a second target
CPU of a corresponding type, and
schedule the task to the second target CPU

Do not schedule the target task,
and continue to run the target
task on the first target CPU

FIG. 4D

MSU_PMU_PARAM register → Model computation logic unit ← MSU_PMU_MODEL_THRESHOLD_H register

MSU_PMU_BLAS_0 register → Model computation logic unit ← MSU_PMU_MODEL_THRESHOLD_L register

PMU counter 0 → Model computation logic unit ← MSU_PMU_MODEL_ID register

MSU_PMU_ register → Model computation logic unit ← MSU_PMU_MODEL_INTERVAL register

PMU counter 1 → Model computation logic unit ← MSU_PMU_MODEL_RESET register

... → Model computation logic unit ← MSU_PMU_MODEL_ENABLE register

MSU_PMU_ register → Model computation logic unit ← MSU_PMU_MODEL_STATUS register

PMU counter n+1 → Model computation logic unit — Interrupt → Operating system

FIG. 5

Compute a current task load characteristic value by using a configured load characteristic computation model — 601

Determine whether the computed task load characteristic value exceeds a preset load threshold — 602

No

Yes

Send an interrupt notification — 603

FIG. 6

```
┌─────────────────────────────────┐
│  Respond to an interrupt notification and  │      701
│  read a monitor invocation interface      │
│              parameter                     │
└─────────────────────────────────┘
                 │
                 ▼
┌─────────────────────────────────┐
│  Access a register of a corresponding load  │    702
│  characteristic monitor based on the        │
│  interface parameter, to obtain a current   │
│  task load characteristic value             │
└─────────────────────────────────┘
                 │
                 ▼
┌─────────────────────────────────┐
│  Generate a task characteristic identifier for  │   703
│  a current task based on the obtained task      │
│  load characteristic value in combination       │
│  with a task scheduling policy of a system      │
└─────────────────────────────────┘
                 │
                 ▼
```

Determine whether the generated task characteristic identifier matches a classification identifier of a CPU on which a target task currently runs                    704

No  →  Send a task scheduling request                    705

Yes
↓

Reconfigure a model parameter                    706

FIG. 7

```
                    ┌─────────────────────────┐
                    │          Start          │
                    └─────────────────────────┘
                                 │
                                 ▼
        ┌──────────────────────────────────────────────┐   801
        │  A CPU 1 selects a next task from a task       │
        │           queue, to wait for running           │
        └──────────────────────────────────────────────┘
                                 │
                                 ▼
        ┌──────────────────────────────────────────────┐   802
        │  Remove a scheduled target task from the task  │
        │  queue of the CPU 1, and update related        │
        │  information of a running queue of the CPU 1   │
        └──────────────────────────────────────────────┘
                                 │
                                 ▼
        ┌──────────────────────────────────────────────┐   803
        │  Schedule the target task to a task queue of   │
        │  a CPU 3, and update related information of a   │
        │       running queue of the CPU 3               │
        └──────────────────────────────────────────────┘
                                 │
                                 ▼
        ┌──────────────────────────────────────────────┐   804
        │      The CPU 1 starts to run the next task     │
        └──────────────────────────────────────────────┘
                                 │
                                 ▼
        ┌──────────────────────────────────────────────┐   805
        │  The CPU 3 selects the target task from the    │
        │  task queue and starts to run the target task  │
        └──────────────────────────────────────────────┘
                                 │
                                 ▼
                    ┌─────────────────────────┐
                    │          End            │
                    └─────────────────────────┘
```

FIG. 8

Receive an invocation request, and obtain a load characteristic computation model invocation parameter and a related model parameter that correspond to a new task ⟋ 901

Invoke a load characteristic computation model corresponding to the new task, and complete configuration of the related model parameter ⟋ 902

For the new task running on a monitored CPU, monitor, based on the load characteristic computation module on which parameter configuration is completed, a task load characteristic value obtained through real-time computation ⟋ 903

FIG. 9

Start to schedule a task

Select a target CPU based on a task characteristic identifier corresponding to a target task — 1001

Schedule the target task and place the target task in a task queue of the target CPU to prepare for running — 1002

Set a load characteristic monitor for the target task, select a characteristic computation model corresponding to the task, and set a parameter of the model — 1003

Run the target task on the target CPU, and monitor a task load of the target task — 1004

Determine whether a monitored task load characteristic value exceeds a threshold — 1005

No

The target task continues to run, and scheduling ends

Determine, in response to an interrupt, a task characteristic identifier corresponding to a current task load of the target task — 1006

Yes

Determine whether the target task needs to be scheduled — 1007

No

Yes

FIG. 10

100

Application scheduling policy service

Software

Task characteristic computation module 200 — Initiate scheduling → Performance-core and efficiency-core scheduler 300

Interrupt    Configure

Monitor invocation interface

Hardware

Node

Performance core
Load characteristic monitor
400

Efficiency core
Load characteristic monitor
400

FIG. 11

```
                    ┌─────────────────────────┐                          100
                    │  ┌───────────────────┐  │                        /
                    │  │  System memory    │  │
                    │  │     1212          │  │
                    │  └───────────────────┘  │
                    │  ┌───────────────────┐  │
                    │  │   Instructions    │  │
                    │  │      1224         │  │
                    │  └───────────────────┘  │
                    └─────────────────────────┘
                                 ↕
┌──────────────┐    ┌─────────────────────────┐    ┌──────────────────────┐
│              │    │                         │    │  ┌────────────────┐  │
│  Processor   │ ↔  │  System control logic   │ ↔  │  │ Nonvolatile    │  │
│    1204      │    │       1208              │    │  │ memory 1216    │  │
│              │    │                         │    │  └────────────────┘  │
│              │    │                         │    │  ┌────────────────┐  │
│              │    │                         │    │  │ Instructions   │  │
│              │    │                         │    │  │    1224         │  │
└──────────────┘    └─────────────────────────┘    │  └────────────────┘  │
                          ↕           ↕             └──────────────────────┘
              ┌─────────────────┐  ┌─────────────────┐
              │ Input/Output    │  │ Network interface│
              │ (I/O) device    │  │    1220          │
              │    1232         │  │                  │
              └─────────────────┘  └─────────────────┘
```

FIG. 12

Mobile phone 600

Antenna 1            Antenna 2

| Mobile communication module<br>2G/3G/4G/5G<br>[650] | Wireless communication module<br>BT/WLAN/GNSS/NFC/IR/FM<br>[660] |

| Speaker [670A] | Audio module [670] | Processor [610] | Sensor module [680] |
| Receiver [670B] | | | Pressure sensor [680A] |
| Microphone [670C] | | | Gyroscope sensor [680B] |
| Headset jack [670D] | | | Barometric pressure sensor [680C] |
| Displays 1 to N [694] | | | Magnetic sensor [680D] |
| Cameras 1 to N [693] | | | Acceleration sensor [680E] |
| Indicator [692] | | | Distance sensor [680F] |
| Motor [691] | | | Optical proximity sensor [680G] |
| Button [690] | | | Fingerprint sensor [680H] |
| SIM card interfaces 1 to N [695] | | | Temperature sensor [680J] |
| External memory interface [620] | | | Touch sensor [680K] |
| Internal memory [621] | | | Ambient light sensor [680L] |

| USB port [630] | Charging management module [640] | Power management module [641] |
| Charging input | | Battery [642] |

FIG. 13

| Application layer | | | | | |
|---|---|---|---|---|---|
| WeChat | Calendar | Maps | WLAN | Music | Messages |
| Browser | Call | Navigation | Bluetooth | Videos | ... |

| Application framework layer | | | |
|---|---|---|---|
| Window manager | Task manager | Content provider | Resource manager |
| Notification manager | View system | Application scheduling policy service | ... |

| System library | | | |
|---|---|---|---|
| Surface manager | Three-dimensional graphics processing library | | Android runtime |
| 2D graphics engine | Media library | ... | |

**Kernel layer**

Kernel task scheduling · Task characteristic computation module · Performance-core and efficiency-core scheduler

| CPU driver 1 | CPU driver 2 | CPU driver 3 | ... | CPU driver n | Another driver |
|---|---|---|---|---|---|

Performance core: CPU 1 · CPU 2 · Efficiency core: CPU 3 · ... · CPU n

Load characteristic monitor · Load characteristic monitor · ...

Monitor invocation interface

FIG. 14

## INTERNATIONAL SEARCH REPORT

| International application No. |
|---|
| **PCT/CN2023/093867** |

### A. CLASSIFICATION OF SUBJECT MATTER

G06F9/48(2006.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; EPTXT; VEN; WOTXT; USTXT; CNKI; IEEE: 处理器, 节点, 集群, 任务, 调度, 负载, 匹配, 等级, 高, 低, 中断, 跳转, 切换, processor, node, cluster, task, schedule, load, match, level, high, low, break, jump, switch

### C. DOCUMENTS CONSIDERED TO BE RELEVANT

| Category* | Citation of document, with indication, where appropriate, of the relevant passages | Relevant to claim No. |
|---|---|---|
| X | CN 111597042 A (GUANGDONG OPPO MOBILE TELECOMMUNICATIONS CORP., LTD.) 28 August 2020 (2020-08-28) description, paragraphs 42-146 | 1-10 |
| X | CN 113656177 A (LENOVO (BEIJING) LIMITED) 16 November 2021 (2021-11-16) description, paragraphs 57-135 | 1-10 |
| A | CN 103646006 A (LESHI ZHIXIN ELECTRONIC TECHNOLOGY (TIANJIN) CO., LTD.) 19 March 2014 (2014-03-19) entire document | 1-10 |
| A | CN 112948066 A (SHENZHEN INSTITUTE OF ADVANCED TECHNOLOGY, CHINESE ACADEMY OF SCIENCES) 11 June 2021 (2021-06-11) entire document | 1-10 |
| A | US 11275623 B1 (CIESLAK, Michael et al.) 15 March 2022 (2022-03-15) entire document | 1-10 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 July 2023** | **26 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/093867**

| Patent document cited in search report | | | Publication date (day/month/year) | Patent family member(s) | | | Publication date (day/month/year) |
|---|---|---|---|---|---|---|---|
| CN | 111597042 | A | 28 August 2020 | None | | | |
| CN | 113656177 | A | 16 November 2021 | None | | | |
| CN | 103646006 | A | 19 March 2014 | CN | 103646006 | B | 31 August 2016 |
| CN | 112948066 | A | 11 June 2021 | None | | | |
| US | 11275623 | B1 | 15 March 2022 | US | 2022121492 | A1 | 21 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211001547